# EUROPÄISCHE PATENTSCHRIFT

(11) **EP 3 941 711 B1**
(45) Veröffentlichungstag und Bekanntmachung des Hinweises auf die Patenterteilung: **26.04.2023**
(21) Anmeldenummer: 20709249.5
(22) Anmeldetag: 13.03.2020
(51) Int. Cl.: B29C 49/78, B29C 49/42, B29C 49/06, B29C 49/36

(54) **BLASVENTILVORRICHTUNG EINER BLASVORRICHTUNG**
BLOW VALVE DEVICE OF A BLOWING DEVICE
DISPOSITIF DE SOUPAPE DE SOUFFLAGE POUR UN DISPOSITIF DE SOUFFLAGE

(30) Priorität: 22.03.2019 EP 19164639; 17.04.2019 EP 19169887
(43) Veröffentlichungstag der Anmeldung: 26.01.2022
(73) Patentinhaber: Eugen Seitz AG, 8623 Wetzikon (CH)
(72) Erfinder: SCHMIDT, Joachim, 8442 Hettlingen (CH); FEHLMANN, Mathias, 8330 Pfäffikon ZH (CH)
(74) Vertreter: Clerc, Natalia
(86) Internationale Anmeldenummer: PCT/EP2020/056941
(87) Internationale Veröffentlichungsnummer: WO 2020/193236

(56) Entgegenhaltungen:
- EP-A2- 1 306 195
- EP-A2- 2 098 356
- DE-A1-102017 109 112
- US-A1- 2008 069 914
- US-A1- 2015 097 306
- US-A1- 2016 114 519
- US-A1- 2016 158 994
- US-A1- 2016 332 357

## Beschreibung

### TECHNISCHES GEBIET

Die vorliegende Erfindung betrifft ein Verfahren, ein Steuersystem und ein Computerprogrammprodukt zur Überwachung einer Blaseinheit zur Herstellung eines Hohlkörpers.

### STAND DER TECHNIK

Hohlkörper aus thermoplastischen Kunststoffen, insbesondere PP oder PET Flaschen (PP = Polypropylen; PET = Polyethylenterephthalat) werden üblicherweise mittels Blasmaschinen hergestellt. Hierfür wird ein Rohling oder Vorformling der Blasmaschine zugeführt. Der Rohling weist im Wesentlichen bereits den fertigen Flaschenkopf auf, mittels dessen der Rohling in einer Blasform der Blasmaschine gehalten wird. Durch Einblasen eines Prozessgases, üblicherweise Luft, durch den Flaschenkopf wird der gewärmte Rohling aufgeblasen, bis er seine endgültige Form erreicht hat. Diese Form wird durch ein umschliessendes Formwerkzeug definiert.

Das Einblasen erfolgt vorzugsweise in zwei oder mehr Stufen. Beim Vorblasen mit einem ersten Druck von üblicherweise 2 bis 20 bar wird der Rohling zuerst länger bis er sich auch radial ausdehnt, beim nachfolgenden Hauptblasen mit einem höheren zweiten Druck von üblicherweise 15 bis 40 bar wird der Hohlkörper in seine gewünschte endgültige Form gebracht. Je nach Verfahren wird nur geblasen oder der Rohling wird zudem während des Vorblasens mittels eines verschiebbaren Dorns, auch Reckstange genannt, gestreckt. Dieses zweite Verfahren wird Streckblasen genannt.

Die heutigen Blasmaschinen und Streckblasmaschinen weisen üblicherweise eine Vorrichtung zur teilweisen Rückgewinnung des Prozessgases auf, d.h. es findet eine Rekuperation statt. Das restliche Prozessgas wird anschliessend nach aussen geführt, der Hohlkörper somit entlüftet.

Das Vorblasen, das Hauptblasen und falls vorhanden die Rekuperation sowie die Entlüftung werden über jeweilige Ventile gesteuert, hier Prozessventile genannt.

Die Herstellung derartiger Hohlkörper mittels Blasmaschinen erfolgt innerhalb weniger Sekunden, üblicherweise innerhalb von 1 - 3 s. Die Prozessventile müssen deshalb entsprechend kurze Ansprechzeiten aufweisen.

Bewährt haben sich vorgesteuerte Blasventilanordnungen, hier auch Prozessventile genannt, die ein pneumatisch betätigtes Hauptventil und mindestens ein zugehöriges Pilotventil aufweisen. Je nach Ausführungsform ist zusätzlich mindestens eine Boosterstufe vorhanden. Im Hauptventil wird die Druckluft verwendet, welche auch als Arbeitsmedium zum Formen des Hohlkörpers verwendet wird, wobei das Hauptventil mittels des mindestens einen Pilotventils pneumatisch vorgesteuert ist. Das Steuergas, üblicherweise ebenfalls Luft, wird mittels des mindestens einen Pilotventils einem Steuerraum des Hauptventils zugeführt. Je nach Ausführungsform ist ein Pilotventil pro Hauptventil vorhanden oder es sind zwei Pilotventile pro Hauptventil vorhanden. Als Pilotventile werden üblicherweise Solenoidventile verwendet, also Magnetventile mit einer Spindel, auch Stössel genannt.

Ein derartiges Prozessventil mit einem Pilotventil und einem pneumatischen Hauptventil ist in WO 2015/010216 beschrieben. Üblicherweise sind die einzelnen Prozessventile in einem gemeinsamen Ventilblock zusammengefasst, wie dies beispielsweise in EP 2 837 486 B1 beschrieben ist.

In anderen Ausführungsformen wird anstelle des oben beschriebenen pneumatisch vorgesteuerten Ventils ein direkt gesteuertes Prozessventil verwendet. Der Elektromagnet bringt die zur Bewegung des Prozessventils notwendige Kraft direkt auf.

Um eine gleichbleibende Qualität der endgültigen Hohlkörper zu gewährleisten, ist es notwendig, dass keinerlei Abweichungen im Prozessverlauf vorkommen. Bereits die kleinsten Abweichungen im Druck des Prozessgases oder in den Blaszeiten können zu einer unerwünscht grossen Ausschussmenge an nicht zufrieden stellenden Endprodukten führen.

Die Prozessventile sind jedoch hohen Belastungen ausgesetzt und müssen eine hohe Anzahl von Schaltzyklen innert kürzester Zeit gewährleisten. Dabei müssen sie äusserst präzise arbeiten und möglichst kurze Ansprechzeiten aufweisen. Die Ventile unterliegen jedoch einem Alterungsprozess. Deshalb werden sie vorsorglich nach einer vorgegebenen maximalen Einsatzdauer und/oder einer vorgegebenen maximalen Anzahl Schaltzyklen ersetzt. Dabei muss die Blasmaschine stillgelegt werden. Der Produktionsausfall und vor Allem der Austausch der Ventile an sich erhöhen die Produktionskosten.

Der Alterungsprozess der einzelnen Prozessventile, insbesondere des Vorblasventils, des Hauptblasventils, des Rekuperationsventils und des Entlüftungsventils, findet in diversen Bereichen statt. Beispielsweise unterliegen die Hochdruckdichtungen und der Kunststoff des Kolbens einem Verschleiss. Zudem neigt der Stössel des Solenoidventils dazu, spontan auszufallen. Fällt dieser Stössel aus, so lässt sich das Hauptventil nicht mehr betätigen. Die vorwiegende Ausfallursache bei den Pilotventilen ist eine Reibungserhöhung beim Stössel, wodurch dieser sich verzögert bewegt und damit das Hauptventil verzögert aktiviert. Diese Reibungserhöhung wird meist durch Abrieb oder Verschmutzung erzeugt.

US 2016/0332357 A1 offenbart ein Verfahren, um einen Alterungsprozess oder eine andere Fehlfunktion der Ventile festzustellen. Dieses Verfahren basiert auf Druckmessung im Innern des Hohlkörpers. Der Zeitpunkt des Befehls zum Öffnen des Ventils wird festgehalten und mittels einer Druckmessung oder mittels eines anderen Detektionsmittels wird der Zeitpunkt des Druckanstiegs im Innern des Rohlings detektiert. Daraus wird eine Zeitverzögerung beim Öffnen des Ventils berechnet und dieser Wert wird mit einem vom Hersteller des Ventils gelieferten Wert verglichen. In US 2016/0332357 A1 wird von Solenoidventilen gesprochen und es wird darauf hingewiesen, dass diese in WO 2006/008380 offenbart seien. Das englischsprachige Pendant dazu ist die US 2008/0069914 A1. Dort sind pneumatische Kolbenventile dargestellt, welche mittels nicht näher beschriebenen Steuereinheiten gesteuert werden. Diese Kolbenventile werden in der genannten Publikation fälschlicherweise Solenoidventile genannt.

Ferner hängt ein erfolgreicher Blasprozess von vielen Faktoren ab. Beispiele hierfür sind: die verwendeten Drücke können für einen spezifischen Blasprozess nicht optimal gewählt sein, der Druck kann sich im Laufe des Tages ändern, Temperaturen können schwanken, der Rohling wird nicht optimal gehalten oder das Abwerfen des hergestellten Blasformkörpers erfolgt nicht korrekt. Ein wesentlicher Faktor sind jedoch die Prozessventile. Diese sind hohen Belastungen ausgesetzt und müssen eine grosse Anzahl von Schaltzyklen innert kürzester Zeit gewährleisten. Dabei müssen sie äusserst präzise arbeiten und möglichst kurze Ansprechzeiten aufweisen. Alterungsprozesse und auch andere Faktoren beeinträchtigen jedoch die Funktionsweise der Prozessventile. Prozessventile können trotz zeitlich korrekt gesendetem Steuerbefehl verspätet, zu schnell, zu langsam oder sich gar nicht öffnen. Selbst wenn die Prozessventile korrekt arbeiten, lassen sich durch eine Korrektur der Ansteuerung der Prozessventile andere Fehlerquellen kompensieren. Z.B. lässt sich der Zeitpunkt zum Senden des Steuerbefehls an das Prozessventil bzw. die Dauer des Offenzustandes des Ventils verändern, falls der Tankdruck sich nicht in einem vorgegebenen Bereich befindet.

US 9 676 136 B2 offenbart ein Steuersystem für eine Blaseinheit mit mehreren Blasstationen. Das System beinhaltet eine übergeordnete Steuereinheit und mehrere untergeordnete Steuereinheiten. Jede untergeordnete Steuereinheit steuert eine oder mehrere Blasstationen. Der Druck in der Blasform wird während des Blasprozesses gemessen, als Kurve aufgezeichnet. Die untergeordnete Steuereinheit sendet einen zu einem spezifischen Punkt in der Kurve gehörenden Wert zur übergeordneten Steuereinheit. Die übergeordnete Steuereinheit berücksichtigt die von allen untergeordneten Steuereinheiten gemeldeten Werte zu diesem spezifischen Punkt und berechnet daraus einen spezifischen Wert. Weicht dieser spezifische Wert von einer theoretischen Vorgabe ab, so wird ein entsprechend angepasster Steuerbefehl an jede untergeordnete Steuereinheit gesandt und die untergeordneten Steuereinheiten führen die weiteren Blasprozesse basierend auf diesem neuen korrigierten Steuerbefehl durch.

Dieses Verfahren ist relativ aufwendig und benötigt entsprechende Rechnerleistung. Zudem können individuelle Fehler in einer einzelnen Blasstation kaum erkannt werden.

In EP 1 306 195 A2 werden die einzelnen Blasventile einzeln mit Drucksensoren überwacht. Die einzelnen Ergebnisse werden individuell verarbeitet und für die weitere Steuerung verwendet.

### DARSTELLUNG DER ERFINDUNG

Es ist deshalb eine Aufgabe der Erfindung, Fehlfunktionen in Blasmaschinen möglichst frühzeitig zu erkennen.

Diese Aufgabe lösen ein Verfahren mit den Merkmalen des Anspruchs 1, ein Steuersystem mit den Merkmalen des Anspruchs 16 und ein Computerprogrammprodukt mit den Merkmalen des Anspruchs 18.

Das erfindungsgemässe Verfahren dient der Überwachung einer Blaseinheit von mehreren Blasstationen zur Herstellung eines Hohlkörpers. Jede Blasstation weist mindestens eine Prozessventileinheit zum Zuführen eines Prozessfluids in einen Vorformling des Hohlkörpers unter Prozessdruck auf, wobei die Prozessventileinheit mindestens ein Ventil aufweist. Jeder Blasstation ist mindestens ein Sensor zugeordnet. Das Verfahren weist mindestens folgende Schritte auf:
- Erfassen mindestens eines ersten Sensorwerts in jeder Blasstation,
- Übermitteln eines ersten Datenwerts, der dem mindestens einen erfassten ersten Sensorwert jeder Blasstation zugeordnet ist, an eine Datenverarbeitungseinheit und
- Ermitteln eines ersten statistischen Mittelwerts der übermittelten ersten Datenwerte in der Datenverarbeitungseinheit.

Vorzugsweise umfasst das Verfahren zusätzlich die Definition des ersten statistischen Mittelwerts als Sollwert.

Anstelle einer Bildung eines Mittelwerts lassen sich die einzelnen ersten Sensorwerte der diversen Stationen auch ohne Mittelwertbildung miteinander vergleichen, wobei die Sensorwerte vorzugsweise in demselben Blasprozess, d.h. sehr zeitnah, oder alterntiv in unterschiedlichen Zeitpunkten in unterschiedlichen Blasprozessen gemessen wurden. Alternativ oder zusätzlich lassen sich die Daten derselben Messstation, gemessen in unterschiedlichen Blasprozessen, d.h. zu unterschiedlichen Zeitpunkten, miteinander vergleichen. All dies wird als separate Erfindungen ebenfalls beansprucht.

Das erfindungsgemässe Verfahren gemäss Anspruch 1 beruht somit auf einer vergleichenden Messung und Analyse. Auf diese Weise lassen sich Ausreisser von der Norm rasch erkennen. Der Sollwert ist dabei nicht vorgegeben, insbesondere wird er nicht aufgrund von theoretischen Grundlagen berechnet. Vielmehr wird ein statistischer Mittelwert verwendet, der empirisch ermittelt wurde. Dies ist insbesondere dann vorteilhaft, wenn die Schnittstelle zwischen der Maschinensteuerung, welche die Rezeptur kennt, und der Datenverarbeitungseinheit keine Prozessparameter übermittelt und somit der Hersteller der Ventilblöcke und der zugehörigen Aktorboxen die Rezeptur nicht kennt. Trotzdem kann der Hersteller der Ventilblöcke und Aktorboxen ein brauchbares Analysetool zur Verfügung stellen, um frühzeitig Probleme im Ventilblock, aber auch in anderen Bereichen der Blasstation zu erkennen.

In einer bevorzugten Variante des Verfahrens ist der übermittelte erste Datenwert der erfasste erste Sensorwert selber. In anderen Ausführungsformen ist der erste Datenwert eine Differenz oder eine andere geeignete Art von Umwandlung des Sensorwertes.

Vorzugsweise weist die Blaseinheit eine zentrale Steuerung auf, welche die einzelnen Blasstationen direkt oder indirekt steuert. In einer bevorzugten Variante des Verfahrens wird der definierte Sollwert in dieser zentralen Steuerung gespeichert und dient der weiteren Steuerung der einzelnen Blasstationen.

Die Datenverarbeitungseinheit kann als separate Funktionseinheit ausgebildet sein. Vorzugsweise ist sie Teil der zentralen Steuerung. Auch wenn sie Teil der zentralen Steuerung ist, ist sie je nach Ausführungsform ein zur Maschinensteuerung separates Modul. Dadurch kann dieses Modul beispielsweise vom Ventilblockhersteller hergestellt und geliefert werden und die Maschinensteuerung, welche die Rezeptur, d.h. die Betriebsparameter für die Blaseinheit und die einzelnen Blasstationen aufweist, kann separat von einem anderen Hersteller erzeugt werden.

In einer bevorzugten Variante ist die Datenverarbeitungseinheit durch mehrere dezentrale Datenverarbeitungseinheiten gebildet, wobei diese Teil von dezentralen Steuerungseinheiten sind. In diesem Fall liefert die Maschinensteuerung oder ein anderer Teil einer zentralen Steuerung vorzugsweise die relevanten Parameter der Rezeptur an die dezentralen Steuerungseinheiten. Vorzugsweise wird mindestens der definierte Sollwert in den dezentralen Steuerungseinheiten gespeichert.

In einer bevorzugten Variante des erfindungsgemässen Verfahrens weist dieses mindestens die folgenden weiteren Schritte auf:
- Ermitteln, ob einzelne übermittelte erste Sensorwerte eine vorgegebene Abweichung vom ersten statistischen Mittelwert aufweisen, und,
- falls ein einzelner erster Sensorwert eine derartige Abweichung aufweist, Identifizierung der zum Sensorwert zugehörigen Blasstation.

Dadurch lässt sich einfach ermitteln, wenn in einer Blaseinheit ein Problem bei einer der Blasstationen auftritt, da dessen Sensorwert von den entsprechenden Sensorwerten der übrigen Blasstationen in statistisch relevanter Form abweicht. Vorteilhaft ist, dass diese Blasstation identifiziert werden kann, so dass eine entsprechende Meldung gemacht und gegebenenfalls entsprechende Massnahmen ergriffen werden können. Die Massnahmen können das kurzzeitige Abschalten der entsprechenden Blasstation sein oder eine andere Art der Ansteuerung dieser Station.

In einer weiteren bevorzugten Variante des erfindungsgemässen Verfahrens weist das Verfahren mindestens die folgenden weiteren Schritte auf:
- Erfassen mindestens eines zweiten Sensorwerts in jeder Blasstation in einem zweiten Blasprozess,
- Übermitteln des mindestens einen erfassten zweiten Sensorwerts jeder Blasstation an die Datenverarbeitungseinheit,
- Ermitteln eines zweiten statistischen Mittelwerts der übermittelten zweiten Sensorwerte in der Datenverarbeitungseinheit.

Vorzugsweise wird bei Abweichung des zweiten statistischen Mittelwerts vom ersten statistischen Mittelwert der zweite statistische Mittelwert als Sollwert definiert.

Da die zweiten Sensorwerte in einem zweiten Blasprozess, also zu einem späteren Zeitpunkt gemessen werden, kann auf einfache Art und Weise herausgefunden werden, ob die Rezeptur gewechselt hat. Haben sich in allen Blasstationen die zweiten Sensorwerte im Vergleich zu den ersten Sensorwerten in ähnlicher Weise geändert, so kann davon ausgegangen werden, dass die Blasstationen nach wie vor korrekt arbeiten und dass die Rezeptur zwischen den zwei Erfassungszeitpunkten geändert hat. Der Vergleich kann wie oben beschrieben über die Bildung des Mittelwerts erfolgen. Alternativ, und dies wird hier separat beansprucht, lassen sich jeweils auch die einzelnen ersten und zweiten Sensorwerte der jeweiligen Blasstation miteinander vergleichen, ohne Mittelwertbildung.

Ist das Endprodukt, das heisst der aufgeblasene Hohlkörper, zufriedenstellend in seiner Qualität, sind keine Massnahmen an der Steuerung notwendig. Andernfalls können entsprechende Massnahmen ergriffen werden, z.B. eine weitere Anpassung der Rezeptur. Ist das Endprodukt zufriedenstellend, so kann der neue statistische Mittelwert als Sollwert für spätere ähnliche Prozesse verwendet werden.

Vorzugsweise weist das erfindungsgemässe Verfahren mindestens die folgenden weiteren Schritte auf:
- entweder Ermitteln, ob einzelne übermittelte zweite Sensorwerte eine vorgegebene Abweichung vom ersten statistischen Mittelwert aufweisen oder Ermitteln, ob einzelne übermittelte zweite Sensorwerte eine vorgegebene Abweichung vom zweiten statistischen Mittelwert aufweisen,
   und,
- falls ein einzelner zweiter Sensorwert eine derartige Abweichung aufweist, Identifizierung der zum Sensorwert zugehörigen Blasstation.

Vorzugsweise werden nach der Ermittlung des zweiten statistischen Mittelwerts zuerst vom zweiten statistischen Mittelwert oder alternativ vom ersten statistischen Mittelwert abweichende einzelne zweite Sensorwerte ermittelt. Anschliessend wird mit den restlichen zweiten Sensorwerten ein neuer zweiter statistischer Mittelwert gebildet. Bei Abweichung von diesem neuen zweiten statistischen Mittelwert vom ersten statistischen Mittelwert wird erst dieser neue zweite statistische Mittelwert als Sollwert für die Blasstationen definiert.

Diese zusätzlichen Schritte dienen dazu, einen neuen statistischen Mittelwert, der als neuer Sollwert dienen soll, möglichst genau zu ermitteln. Dies erfolgt, indem allfällige problematisch funktionierende Blasstationen von dieser Ermittlung des Mittelwerts ausgeschlossen werden.

Auch in dieser Variante ist der übermittelte zweite Datenwert vorzugsweise der erfasste zweite Sensorwert, wobei er auch in diesen Fällen ein bearbeiteter Sensorwert, z.B. eine Differenz, sein kann. Beispielsweise sind in allen beschriebenen Verfahren der übermittelte erste und/oder der zweite Datenwert die Differenz zwischen dem erfassten ersten Sensorwert und dem gespeicherten Sollwert.

In einer bevorzugten Variante des erfindungsgemässen Verfahrens misst der mindestens eine Sensor mindestens einen der folgenden Parameter: Druck im herzustellenden Hohlkörper, Druck in einem Fluidtank, Strom eines Pilotventils, Position oder Bewegung des Kolbens eines Prozessventils.

Das erfindungsgemässe Steuersystem einer Blaseinheit weist mehrere Blasstationen auf, wobei die Blaseinheit eine zentrale Steuereinheit aufweist und wobei jeder Blasstation mindestens ein Sensor zugeordnet ist. Die Blaseinheit weist mindestens eine Datenverarbeitungseinheit auf, wobei die mindestens eine Datenverarbeitungseinheit Auswertemittel aufweist, um aus Daten, die auf den von den Sensoren erhaltenen Sensorwerten basieren, einen statistischen Mittelwert zu bilden. Die Blaseinheit weist Speichermittel zur Speicherung des ermittelten statistischen Mittelwerts als Sollwert auf.

Vorzugsweise ist eine Maschinensteuerung vorhanden, die mit der mindestens einen Datenverarbeitungseinheit gemeinsam eine zentrale Steuereinheit bildet.

Das erfindungsgemässe Computerprogrammprodukt dient der Durchführung des oben beschriebenen Verfahrens und seiner Varianten.

In Varianten des Verfahrens lassen sich Fehlfunktionen und Alterungsprozesse von Prozessventilen in Blasmaschinen möglichst frühzeitig zu erkennen.

In diesen Verfahrensvarianten zur Überwachung einer Blasvorrichtung zur Herstellung eines Hohlkörpers weist die Blasvorrichtung mindestens eine Prozessventileinheit zum Zuführen eines Prozessfluids in einen Vorformling des Hohlkörpers unter Prozessdruck auf und die Prozessventileinheit weist mindestens ein elektrisch betriebenes, insbesondere ein elektromagnetisch betriebenes Ventil auf. Während eines Blasprozesses wird mindestens ein Wert eines elektrischen Stroms des elektrisch betriebenen Ventils detektiert. Vorzugsweise wird während des Blasprozesses ein Verlauf des elektrischen Stroms detektiert.

Die Überwachung des Stroms des elektrisch betriebenen Ventils bietet in diesen Varianten nicht nur die Erkennung eines aktuellen Fehlverhaltens sondern ermöglicht zudem eine Früherkennung und eine Beobachtung eines Alterungsprozesses des Ventils. Insbesondere das Verhalten des Stössels lässt sich beobachten und ein möglicher Ausfall dieses wichtigen Bauteils wird frühzeitig erfasst. Insbesondere elektromagnetisch betätigte Pilotventile, welche zur Vorsteuerung von pneumatischen Hauptventilen verwendet werden, lassen sich so zuverlässig überwachen. Auch andere Arten von Ventilanordnungen mit Solenoidventilen lassen sich so überwachen.

Dank dieser Verfahrensvarianten lässt sich rechtzeitig erkennen, wann ein Ventil ausgewechselt werden muss, beispielsweise basierend auf Erfahrungswerten im Verhalten früher verwendeter Ventile des gleichen Typus. Ventile müssen nicht mehr nach vordefinierten theoretischen Zeitspannen oder bei Erreichen einer theoretisch festgelegten Anzahl Schaltzyklen ausgewechselt werden. Sie können dann ausgewechselt werden, wenn tatsächlich die Gefahr besteht, dass sie in nächster Zeit ihre Funktion nicht mehr zufriedenstellend erfüllen können. Grundsätzlich lässt sich so die Einsatzdauer derartiger Ventile verlängern und dadurch Kosten sparen. Zudem ist jedoch auch gewährleistet, dass Ventile, welche bereits vor der statistisch bzw. theoretisch festgelegten maximalen Lebensdauer ausfallen werden, frühzeitig identifiziert werden können und deshalb ebenfalls rechtzeitig ausgewechselt werden können. Auf diese Weise lassen sich unerwartete Zwischenfälle an der Blasmaschine und ungeplante Produktionsunterbrüche vermeiden.

Vorzugsweise wird der Strom des Ventils in aufeinander folgenden Zeitabständen gemessen. Diese Zeitabstände sind vorzugsweise sehr kurz, vorzugsweise hochfrequent. Sie betragen beispielsweise 0.1 ms bis 1 ms. Vorzugsweise wird der Strom 1`000 bis 10'000 mal pro Sekunde gemessen. Dadurch lässt sich eine relativ genaue Stromkurve abbilden.

In einer Variante dieser Verfahrensvarianten wird eine Änderung des Stroms gemessen und nicht der Absolutwert des Stroms. In einer bevorzugten Variante des Verfahrens wird der effektive Stromwert gemessen. Vorzugsweise wird dadurch eine Verlaufskurve erhalten mit An- und Abstiegen. Vorzugsweise wird in einer Auswertung die Ableitung verwendet, beispielsweise um den lokalen Wendepunkt zu erkennen, der das Ende der Gegeninduktion und damit das Ende der Stösselbewegung darstellt.

Vorzugsweise wird der Zeitpunkt der Messung des Stroms gemeinsam mit einem zu diesem Zeitpunkt gemessenen Stromwert festgehalten. Diese Werte lassen sich beispielsweise in eine elektronische Tabelle eintragen, welche zur späteren Auswertung und/oder zur Speicherung der Werte verwendet wird.

In einer bevorzugten Form dieser Verfahrensvarianten werden markante Punkte eines Verlaufs des elektrischen Stroms detektiert. Diese markanten Punkte dienen dazu, das Verhalten des Ventils möglichst genau nachvollziehen zu können.

In einer Variante dieser Verfahrensvarianten wird der Strom zu vorgegebenen Zeitpunkten gemessen. Sollen markante Punkte des Stromverlaufs gefunden werden, lassen sich die genäherten Zeitpunkte dieser markanten Punkte beispielsweise mittels Interpolation der gemessenen Stromwerte ermitteln.

Diese Verfahrensvarianten eignen sich insbesondere zur Anwendung mit einer Prozessventileinheit, die ein Hauptventil und mindestens ein Pilotventil aufweist, wobei das mindestens eine Pilotventil das Hauptventil steuert und wobei der Verlauf des elektrischen Stroms mindestens eines des mindestens einen Pilotventils detektiert wird. Vorzugsweise werden alle Pilotventile mittels dieser Strommessung überwacht.

Vorzugsweise ist das Hauptventil ein pneumatisches Ventil, welches mittels des Prozessfluids betrieben ist und welches mittels eines von einem Pilotventil gesteuerten Steuerdrucks gesteuert ist. Das Pilotventil ist elektrisch betrieben. Vorzugsweise ist es ein elektromagnetisches Ventil bzw. ein Solenoidventil.

In einer anderen Ausführungsform ist das Hauptventil direkt gesteuert und der Strom der Steuerung des Hauptventils wird detektiert.

Vorzugsweise wird zusätzlich oder alternativ zur Strommessung während des Blasprozesses ein Druck im Bereich des Innern des Vorformlings, vorzugsweise in einer Verbindungsleitung vom Ventil zum Vorformling, gemessen und der Zeitpunkt der Druckmessung wird ebenfalls festgehalten.

Alternativ oder zusätzlich zur Strommessung und zur Druckmessung im Innern des Vorformlings wird während des Blasprozesses ein Druck im Bereich eines Tanks des Prozessfluids gemessen und der Zeitpunkt der Druckmessung wird festgehalten.

Diese zwei Druckmessungen erlauben es, einen Druckverlauf festzuhalten. Diese Druckmessungen, insbesondere wenn sie mit Druckverläufen früherer Messungen oder mit theoretisch berechneten oder empirisch ermittelten theoretischen Druckverläufen verglichen werden, geben Auskunft über den Status und über Alterungsprozesse der Ventileinheiten und evtl. auch über andere Bereiche der Blasvorrichtung. Sie können zur Früherkennung von Servicearbeiten und des Bedarfs eines Ersetzens von Bauteilen, wie beispielsweise der Ventileinheiten, dienen. Alternativ oder zusätzlich lassen sie sich zur Steuerung der Prozessparameter, wie beispielsweise Schaltzyklen, Schaltzeiten und Höhe der angelegten Drücke, verwenden.

Vorzugsweise werden markante Punkte im Druckverlauf detektiert und mit markanten Punkten in vorbekannten und/oder theoretisch ermittelten Druckverläufen verglichen und die Daten entsprechend ausgewertet. Eine Auswertung kann eine Berechnung umfassen. Andere Arten von Auswertungen sind jedoch auch einsetzbar. Dies gilt in diesem Text generell für die Definition des Begriffs "Auswertung".

Vorzugsweise werden die gemessenen Druckwerte unter Berücksichtigung der gemessenen Werte des Stroms ausgewertet.

Eine Variante der Die Blasventilanordnung einer Blasvorrichtung zur Herstellung eines Hohlkörpers weist mindestens eine Prozessventileinheit zum Zuführen eines Prozessfluids in einen Vorformling des Hohlkörpers unter Prozessdruck auf, wobei die Prozessventileinheit mindestens ein elektrisch betriebenes Ventil aufweist. In dieser Variante ist ein Mittel zur Detektion eines elektrischen Stromwerts des elektrisch betriebenen Ventils während eines Blasprozesses vorhanden. Alternativ oder zusätzlich ist vorzugsweise ein Drucksensor zur Messung des Drucks im Bereich des Innern des Vorformlings vorhanden.

Weitere Ausführungsformen und Variante des Verfahrens sind in den abhängigen Ansprüchen angegeben.

### KURZE BESCHREIBUNG DER ZEICHNUNGEN

Eine bevorzugte Ausführungsform der Erfindung wird im Folgenden anhand der Zeichnungen beschrieben, die lediglich zur Erläuterung dienen und nicht einschränkend auszulegen sind. In den Zeichnungen zeigen:
- Figur 1: ein exemplarisches Beispiel eines Prozessventils mit pneumatischem Hauptventil und einem Pilotventil im geschlossenen Zustand des Hauptventils in einer schematischen Darstellung;
- Figur 2: das Prozessventil gemäss Figur 1 im geöffneten Zustand des Hauptventils;
- Figur 3: eine Einheit, wie in einer Blasmaschine verwendet, mit Ventilblock und Aktorbox
- Figur 4: einen Längsschnitt durch ein Pilotventil;
- Figuren 5a bis 5c: einen Ausschnitt einer graphischen Darstellung von gemessenen Werten während eines Blasprozesses;
- Figuren 6a und 6b: eine graphische Darstellung von gemessenen Werten während eines Teils eines Blasprozesses;
- Figuren 7a bis 7c: eine graphische Darstellung von gemessenen Werten während eines Teils von drei unterschiedlichen Blasprozessen;
- Figuren 8a bis 8c: eine graphische Darstellung von gemessenen Werten während eines vollständigen Blasprozesses;
- Figur 9: eine schematische Darstellung eines Teils einer erfindungsgemässen Blaseinheit in einer ersten Ausführungsform;
- Figur 10: eine schematische Darstellung eines Teils einer erfindungsgemässen Blaseinheit in einer zweiten Ausführungsform;
- Figur 11: eine schematische Darstellung eines Teils einer erfindungsgemässen Blaseinheit in einer dritten Ausführungsform;
- Figur 12a: einen Längsschnitt durch ein erfindungsgemässes Prozessventil in einer ersten Ausführungsform im geöffneten Zustand;
- Figur 12b: einen Längsschnitt durch ein erfindungsgemässes Prozessventil in einer ersten Ausführungsform im geschlossenen Zustand;
- Figur 13a: einen Längsschnitt durch ein erfindungsgemässes Prozessventil in einer zweiten Ausführungsform im geöffneten Zustand;
- Figur 13b: einen Längsschnitt durch ein erfindungsgemässes Prozessventil in einer zweiten Ausführungsform im geschlossenen Zustand;
- Figur 14a: einen Längsschnitt durch ein erfindungsgemässes Prozessventil in einer dritten Ausführungsform im geöffneten Zustand und
- Figur 14b: einen Längsschnitt durch ein erfindungsgemässes Prozessventil in einer dritten Ausführungsform im geschlossenen Zustand
- Figur 15: eine schematische Darstellung einer erfindungsgemässen Blaseinheit;
- Figur 16: eine schematische Darstellung eines Teils des Blaseinheit gemäss Figur 15.

### BESCHREIBUNG BEVORZUGTER AUSFÜHRUNGSFORMEN

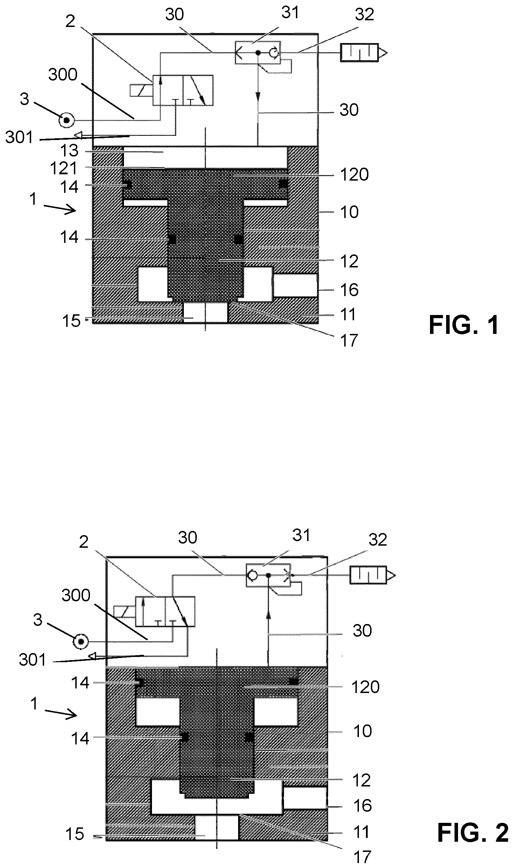

In den Figuren 1 und 2 ist ein typisches Prozessventil dargestellt. Die Erfindung ist jedoch nicht auf diese Art Ventil beschränkt, sondern sie kann auch bei anderen Ventilen angewandt werden, welche ein elektronisch angesteuertes Hilfs- oder Hauptventil verwenden. Insbesondere ist die Erfindung für vorgesteuerte Prozessventile einsetzbar, welche ein pneumatisches Hauptventil und mindestens ein Pilotventil, insbesondere mindestens ein Solenoidventil, aufweisen. In anderen Ausführungsformen ist das Hauptventil direkt gesteuert.

Das hier schematisch dargestellte Prozessventil weist ein pneumatisches Hauptventil 1 und ein Pilotventil 2 in Form eines elektromagnetischen Ventils, also eines Solenoidventils, auf.

Das Hauptventil 1 weist ein Ventilgehäuse 10 mit einem Steuerraum 13, einem Prozessdruck-Eingangskanal 15 und einen Prozessdruck-Ausgangskanal 16 auf. Ein Schaltkolben 12 ist verschiebbar im Ventilgehäuse 10 gehalten, wobei er mittels HochdruckDichtungen 14 gegenüber dem Ventilgehäuse 10 gedichtet ist. Üblicherweise ist er rotationssymmetrisch ausgebildet. Der Schaltkolben 12 liegt im geschlossenen Zustand des Hauptventils 1, wie dies in Figur 1 gezeigt ist, auf einem Ventilsitz 17 auf und verschliesst dadurch eine Verbindung zwischen dem Prozessdruck-Eingangskanal 15 und dem Prozessdruck-Ausgangskanal 16. Im geöffneten Zustand gemäss Figur 2 ist diese Verbindung offen. Im geöffneten Zustand des Hauptventils 1 kann somit das Prozessgas von der hier nicht dargestellten Prozessgasquelle in den hier ebenfalls nicht dargestellten Vorformling oder Rohling gelangen und diesen zur gewünschten Endform des Hohlkörpers, insbesondere der PP oder PET Flasche, aufblasen.

Der Steuerraum 13 des Hauptventils 1 ist über eine Steuerluftleitung 30 mit einer Steuerluftquelle 3 verbunden. Die unter Druck stehende Steuerluft wirkt im Steuerraum 13 auf eine Steuerfläche 121 eines Kolbenkopfes 120 des Schaltkolbens 12. Der dadurch entstehende Steuerdruck erzeugt eine Kraft auf den Schaltkolben12, die grösser ist als die über den Prozessdruck-Eingangskanal 15 auf die gegenüberliegende Seite des Schaltkolbens 12 wirkende Kraft des Prozessgasdruckes. Dadurch wird der Schaltkolben 12 in seiner geschlossenen Stellung gehalten.

Wird der Steuerdruck abgesenkt, so drückt das Prozessgas den Schaltkolben 12 nach oben und das Hauptventil 1 wird geöffnet.

Das Umschalten des Steuerdrucks erfolgt mittels des genannten Pilotventils 2. Dieses ist, wie hier dargestellt, über die Steuerluftleitung 30 mit dem Steuerraum 13 verbunden. Es ist ferner über einen Steuerlufteingangskanal 300 mit der Steuerluftquelle 3 und über einen Steuerluftausgangskanal 301 mit der Umgebung oder einer Steuerluftrückgewinnungseinheit verbunden. Zur schnellen Entlüftung des Steuerraums kann, wie hier dargestellt, ein Steuerluftschaltraum 31 vorhanden sein, welcher über einen zusätzlichen Entlüftungskanal 32 minimale Schaltzeiten gewährleistet. Ein derartiges Prozessventil ist beispielsweise in WO 2015/010216 A1 detailliert beschrieben. Es dient lediglich als Beispiel, um mögliche Funktionen des Hauptventils und des mindestens einen Pilotventils zu verstehen.

In anderen Ausführungsformen dient der mittels des Pilotventils 2 betätigte Steuerdruck zum Öffnen des Hauptventils 1. In weiteren Ausführungsformen dient ein erstes Pilotventil mit einem ersten Steuerdruck zum Öffnen und ein zweites Pilotventil mit einem zweiten Steuerdruck zum Schliessen des Hauptventils 1. In weiteren Ausführungsformen erfolgt die Ansteuerung mittels eines 5/2 Wege Pilotventils, bei dem wechselwirkend entweder oben belüftet und unten entlüftet wird oder umgekehrt.

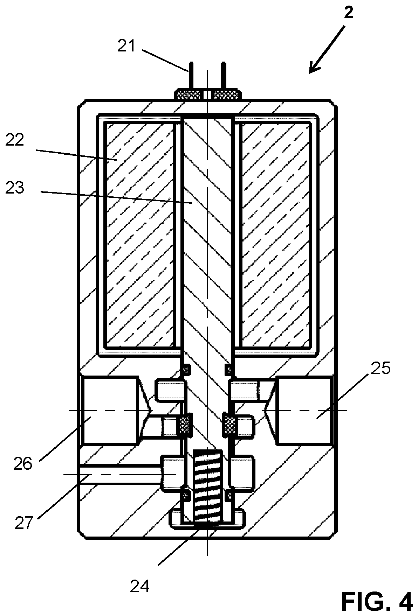

In Figur 4 ist ein Beispiel eines Pilotventils 2 dargestellt, wie es typischerweise in derartigen Prozessventilen eingesetzt ist. Dies ist lediglich ein Beispiel. Es lassen sich auch andere Arten von Pilotventilen einsetzen. Das hier dargestellte Pilotventil 2 weist ein Gehäuse auf, in welchem eine Elektromagnetspule 22 und einen die Spule 22 durchsetzenden Stössel 23 angeordnet ist. An einem Ende des Stössels 23 ist eine Feder 24 angeordnet. Der Stössel 23 ist entgegen der Kraft dieser Feder 24 mittels des Elektromagneten bewegbar. Durch die Bewegung des Stössels 24 wird eine Verbindung zur Druckversorgung freigegeben. Der Anschluss zur Druckversorgung ist mit dem Bezugszeichen 25 versehen. Im unbelasteten Zustand ist eine Verbindung zum Steuerraum des Hauptventils geschaffen. Der entsprechende Ausgang ist mit dem Bezugszeichen 26 versehen. Vorzugsweise ist zudem ein Ausgang 27 zu einem Schalldämpfer vorgesehen.

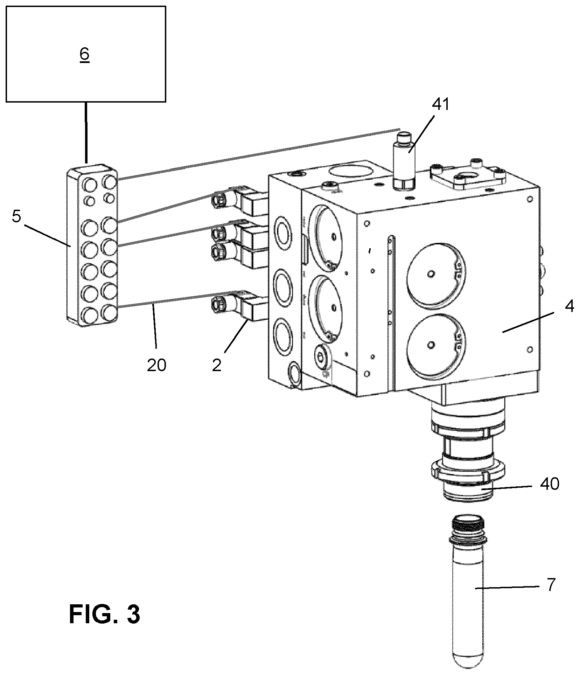

Für die Herstellung eines Hohlkörpers aus einem Rohling sind üblicherweise mehr als ein Prozessventil notwendig. Üblicherweise sind ein Vorblasventil und mindestens ein Hauptblasventil vorhanden. Vorzugsweise sind ferner mindestens ein Rekuperationsventil und/oder ein Entlüftungsventil vorhanden. Diese Ventile sind, wie in Figur 3 dargestellt, vorzugsweise in einem gemeinsamen Ventilblock 4 angeordnet, welcher mindestens einen, vorzugsweise mehrere Prozessdruck-Eingangs- und Ausgangskanäle zur Verbindung mit der Prozessgasquelle aufweist. Mittels des Prozessgases wird der Vorformling in die gewünschte Form des endgültigen Hohlkörpers aufgeblasen. Der Ventilblock 4 weist hierfür eine Blasdüse 40 auf, an welche der aufzublasende Rohling oder Vorformling 7 befestigt wird.

Der Ventilblock 4 weist ferner mindestens einen Drucksensor 41 auf, der den Druck des Prozessgases im Bereich der Düse 40 misst. Dies entspricht mit minimaler und somit vernachlässigbarer Verzögerung dem Druck, welcher im Innern des Rohlings 7 herrscht.

Die einzelnen Pilotventile 2 der einzelnen Prozessventile sind über jeweilige elektronische Steuerungsanschlüsse 20 mit einer Aktorbox 5 verbunden, die wiederum direkt oder über weitere Steuerungsuntereinheiten mit der Maschinensteuerung 6 verbunden ist oder die bereits selber Teil der Maschinensteuerung 6 ist. Die Aktorbox 5 und die Maschinensteuerung 6 werden im Folgenden als Steuereinheit bezeichnet.

Die Steuereinheit steuert die Pilotventile 2 und somit die Prozessventile. Sie erhält zudem die Messdaten des mindestens einen Drucksensors 41.

Je nach Ausführungsform misst die Steuereinheit, vorzugsweise die Aktorbox 5, den Strom mindestens eines, vorzugsweise aller Pilotventile 2. Die Strommessung kann zu einem vorgegebenen Zeitpunkt erfolgen oder es kann der Zeitpunkt bestimmt werden, an welchem ein bestimmter Stromwert erreicht ist. Vorzugsweise wird der Zeitpunkt des Gegenpeaks des Stroms bei Ende der Gegeninduktion beim Ein- und oder Ausschalten des Pilotventils 2 festgestellt. In der bevorzugtesten Ausführungsform erfolgt die Strommessung in vorbestimmten Zeitabständen, beispielsweise alle 0.1 ms.

Die Messung erfolgt mit üblichen und bekannten Mitteln. Die Messung erfolgt beispielsweise, indem ein Messwiderstand in den Stromkreis zum Pilotventil eingebaut ist. Über diesem Widerstand erfolgt ein Spannungsabfall, dessen Grösse anschliessend verstärkt wird. Die Grösse dieses Spannungsabfalls ist proportional zum fliessenden Strom.

Die gemessenen Stromwerte und/oder die gemessenen Zeitpunkte des Auftretens von markanten Stromwerten, beispielsweise der Umkehrpunkt bei der Gegeninduktion, werden mit früheren Messwerten und/oder mit vordefinierten Werten verglichen. Basierend auf einer Abweichung dieser miteinander verglichenen Werte werden Rückschlüsse über den Alterungsprozess und/oder dem Zustand des Pilotventils 2 gezogen. So lassen sich auch Ventileigenschaften feststellen und beobachten, wie beispielsweise Verzögerungen, Genauigkeit und Verschleiss. Ist die Abweichung derart, dass basierend auf Erfahrungswerten ein baldiger Ausfall des Pilotventils 2 wahrscheinlich ist, so wird von der Steuereinheit eine Fehlermeldung generiert und es wird zum Wechseln des entsprechenden Pilotventils 2 aufgefordert. In einer Ausführungsform wird vor der Aufforderung zum Wechsel des Pilotventils über die Steuerung eine Kompensation der Abweichung eingeleitet. Das Signal für die Ventilschaltung wird in diesem Fall vorzugsweise entsprechend der Grösse einer detektierten Verzögerung beim Stromverlauf des Pilotventils früher angefordert. Auf diese Weise lässt sich die Einsatzdauer des Pilotventils verlängern. In anderen Ausführungsformen wird der Zustand des Pilotventils 2 optisch von der Steuereinheit angezeigt, so dass der Benützer den steten Alterungsprozess des Pilotventils 2 frühzeitig beobachten kann.

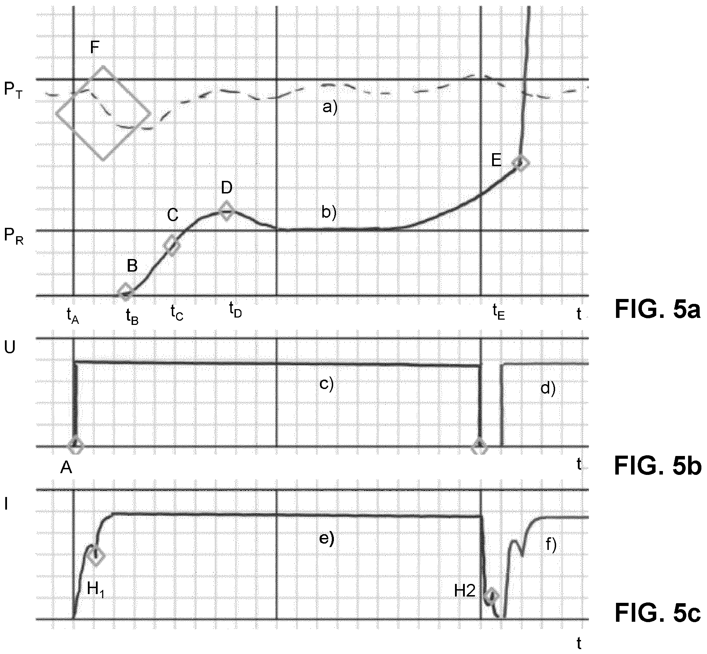

In den Figuren 5a bis 5c ist ein Ausschnitt eines typischen Prozessverlaufes zum Zeitpunkt des Prozessbeginns mit dem Vorblasen dargestellt. Figur 5a zeigt dabei in Kurve a) den Druckverlauf P_{T} in der Prozessdruckquelle, d.h. den Tankdruck als Funktion der Zeit t. Die Kurve b) zeigt den Druck P_{R}, welcher vom Drucksensor 41 im Ventilblock 4 im Bereich des Innenraums des Rohlings als Funktion der Zeit gemessen wurde. In Figur 5b ist das bei diesem Prozess gemessene oder angelegte Spannungssignal U des Pilotventils 2 als Funktion derselben Zeit t wie in der Figur 5a dargestellt. Dabei zeigt die Kurve c) das Spannungssignal U des Pilotventils 2 für das Vorblasventil und die Kurve d) das Spannungssignal U des Pilotventils 2 für das Hauptblasventil. In Figur 5c ist der dazu passende gemessene Stromwert I als Funktion derselben Zeit t der genannten Pilotventile wiedergegeben. Die Kurve e) zeigt den Stromwert I des Pilotventils des Vorblasventils und die Kurve f) den Stromwert I des Pilotventils des Hauptblasventils.

Wie in den Kurven e) und f) gut erkennbar ist, weist der Stromverlauf I beim Einschalten des Pilotventils einen nach unten gerichteten Peak und beim Ausschalten einen nach oben gerichteten Peak auf. Dieser bezeichnet den Zeitpunkt des Endes der Gegeninduktion H₁, H₂. Je nach Ausführungsform werden diese Zeitpunkte t_{H1} und t_{H2} und/oder die Grösse des Peaks detektiert und von der Steuerungseinheit mit einem vorgegebenen Wert verglichen. Vorzugsweise werden diese Daten in der Steuerungseinheit oder in einer Cloud zur späteren Wiederverwendung gespeichert.

Die Zusammenschau der Figuren 5a bis 5c zeigt zudem das Druckverhalten P_{R} im Bereich des Innenraums des Rohlings im Laufe des Prozesses auf. Zum Zeitpunkt A wird die Spannung U an das Pilotventil des Vorblasventils angelegt. Aufgrund der ersten Gegeninduktion H₁ reagiert das Pilotventil jedoch zeitverzögert. Der Innendruck P_{R} im Rohling steigt zeitverzögert an. Zum Zeitpunkt t_{B} in der Kurve b) der Figur 5a hebt sich erstmals der Druckanstieg genügend deutlich vom Messrauschen ab. Der Druck in Punkt C zum Zeitpunkt tc in der Kurve b) gemäss Figur 5a beträgt circa 50% des ersten Druckanstiegs (d.h. des Druckanstiegs bis zur ersten Senkung des Drucks). Die Differenz zwischen dem Zeitpunkt tc und t_{B} gibt einen Hinweis darauf, dass sich das Hauptventil zeitgerecht vollständig geöffnet hat.

Der Druck P_{T} im Tank ist bereits früher gesunken, wie der Bereich F in der Kurve a) zeigt. In Punkt D zum Zeitpunkt t_{D} der Kurve b) beginnt sich der Rohling auch radial auszudehnen. Dies hat erfahrungsgemäss zur Folge, dass der Druck P_{R} im Innern des Rohlings kurzfristig sinkt, wie dies in Kurve b) gut erkennbar ist. Es folgt eine Zeitdauer mit annähernd gleichbleibendem Druck P_{R} im Innern des Rohlings mit einem nachfolgenden Anstieg. Auch dies ist in Kurve b) gut erkennbar.

Die Abschaltung des Pilotventils des Vorblasventils erfolgt ebenfalls zeitverzögert mit der zweiten Gegeninduktion H₂. Das kurz darauf erfolgte Einschalten des Hauptblasventils (Kurve d) in Figur 5b) und Kurve f) in Figur 5c) verläuft wiederum zeitverzögert. Punkt E in der Kurve b) zeigt den Druckanstieg nach dem Einschalten des Hauptblasventils. Wie in Kurve b) erkennbar ist, folgt der massive Anstieg des Innendrucks P_{R} im teilweise aufgeblasenen Rohling zeitverzögert.

In einer Variante des Verfahren werden nicht nur die Zeitpunkte und/oder die Höhe mindestens einer der Gegeninduktionen H₁ und H₂ festgestellt, sondern es werden auch die Drücke überwacht. Es kann der Druck P_{T} im Prozesstank und/oder der Druck P_{R} im Ausgangskanal des Ventilblocks und somit im Innern des Rohlings gemessen werden. Vorzugsweise werden die Werte in sehr kurzen Zeitintervallen als Funktion der Zeit gemessen. Alternativ können diese Drücke P_{T} und/oder P_{R} auch zu vorgegebenen Zeitpunkten gemessen werden. Diese Werte werden mit zu früheren Zeitpunkten gemessenen Werten und/oder mit vorgegebenen Werten verglichen. Abweichungen werden detektiert. Bei Über- und/oder Unterschreitung von vorgegebenen Grenzwerten und/oder vorgegebenen maximalen Abweichungen wird dies angezeigt.

Je nach Ausführungsform dienen diese Werte zur Überwachung von Alterungsprozessen in der Maschine, insbesondere im Ventilblock und/oder im Prozessgastank. Alternativ oder zusätzlich lassen sie sich auch zur Steuerung der Blasmaschine verwenden, beispielsweise in dem der Prozessdruck erhöht oder erniedrigt wird, die Zeitpunkte der Betätigung der Prozessventile geändert werden und/oder die Schaltzyklen der Prozessventile verändert werden.

Vorzugsweise werden die Daten der Druckmessung P_{R} im Innenraum des Rohlings mit den Daten der Strommessung I der Pilotventile kombiniert und gemeinsam ausgewertet. Dies ergibt beispielsweise weitere Erkenntnisse zum Zustand des Prozessventils, insbesondere zum Alterungsprozess der übrigen Teile des Pilotventils und/oder des Hauptventils.

In einer anderen Ausführungsform wird die Druckmessung P_{R} im Innenraum des Rohlings und/oder die Messung des Tankdrucks P_{T} als Funktion der Zeit ohne die Messung des Stroms I der Pilotventile durchgeführt und daraus Informationen zum Status der Ventileigenschaften und/oder zum Alterungsprozess der Prozessventile gewonnen.

Das oben beschriebene Verfahren und die oben beschriebene Vorrichtung ermöglichen die Früherkennung eines Alterungsprozesses der Prozessventile, insbesondere deren Pilotventile und/oder das Erkennen des Status von Ventileigenschaften.

Nachfolgend wird die beanspruchte Erfindung anhand bevorzugter Ausführungsformen und anhand der Figuren beschrieben:

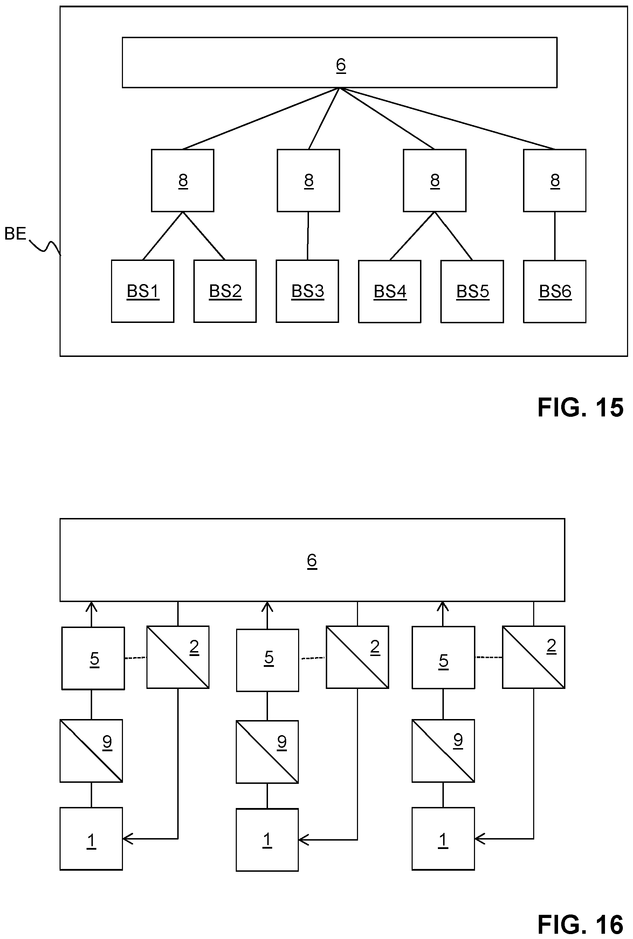

In Figur 15 ist schematisch eine erfindungsgemässe Blaseinheit BE mit mehreren Blasstationen BS1 bis BS6 dargestellt. Es können zwei, drei oder mehr Blasstationen vorhanden sein. In diesem Beispiel sind es sechs Stationen. Jede Blasstation BS1 bis BS6 ist mit einer dezentralen Datenverarbeitungseinheit 8 verbunden, wobei eine dezentrale Datenverarbeitungseinheit 8 auch mehreren Blasstationen zugeordnet sein kann. Die dezentralen Datenverarbeitungseinheiten 8 sind mit einer zentralen Steuereinheit 6 verbunden. Die Steuereinheit 6 beinhaltet die Maschinensteuerung der Blaseinheit. Je nach Ausführungsform weist sie ein getrenntes Modul auf, welches funktionell und je nach Ausführungsform auch örtlich getrennt von der Maschinensteuerung ausgebildet ist, jedoch mit dieser kommuniziert. Dieses Modul steht mit den dezentralen Datenverarbeitungseinheiten in kommunizierender Verbindung.

In Figur 16 sind Teile der Blaseinheit BE gemäss Figur 15 dargestellt. Es sind nur noch drei Blasstationen gezeigt. Jede Blasstation ist vereinfacht mit einem einzigen Hauptventil 1 dargestellt. In realen Blasstationen sind jedoch pro Station mehrere Ventile, d.h. das oben erwähnte Vorblasventil, ein oder mehrere Blasventile und ein oder mehrere Rekuperationsventile und Entlüftungsventile vorhanden. Das Hauptventil 1 wird mittels eines Pilotventils 2 angesteuert. Ein typisches Ausführungsbeispiel eines derartigen Ventils 1 mit Pilotventil 2 ist anhand der Figuren 1 und 2 weiter unten im Text beschrieben.

Das Pilotventil 2 wird vorzugsweise von der zentralen Steuereinheit 6 oder von einer dezentralen Steuereinheit, nachfolgend Aktorbox 5 genannt, gesteuert. Das Ventil 1 und auch andere Bereiche der entsprechenden Blasstation sind mit einer Sensoreinheit 9 verbunden, welche Sensoren beinhaltet oder Messwerte von Sensoren erhält.

Die Sensoren können einen Druck im Vorformling während des Blasprozesses messen. Der Druck kann über die gesamte Prozesszeit, d.h. während des Vorblasens, des Blasens, der Rekuperation und der Entlüftung gemessen werden. Der Druck kann auch nur während eines Zeitabschnitts des Prozesses oder zu vordefinierten Zeiten gemessen werden. Die Sensoren können auch andere Parameter messen, wie beispielsweise den Strom des Pilotventils oder Bewegungen einzelner Teile der Blasstation, insbesondere des Ventils 1.

Je nach Ausführungsform sind die Sensoreinheit 9 und die dezentrale Steuereinheit 5 als ein gemeinsames Modul oder als getrennte Bauteile ausgebildet. Anstelle einer dezentralen Steuereinheit, d.h. einer mit Steuerungsfunktionen versehenen Aktorbox 5, lässt sich das Modul auch als Datenverarbeitungseinheit ohne Steuerfunktionen ausbilden. Die Steuerung wird dann von der zentralen Steuereinheit 6 übernommen. Die Steuerung kann auch von der zentralen Steuereinheit 6 teilweise auf die Aktorbox 5 oder einer anderen dezentralen Steuereinheit übergeben werden. Vorzugsweise werden einfache Steuerbefehle über die Aktorbox 5 ausgeführt, um die zentrale Steuereinheit 6 zu entlasten.

In den Figuren 1 und 2 ist ein typisches Prozessventil dargestellt. Es weist ein pneumatisches Hauptventil 1 und mindestens ein Pilotventil, insbesondere ein elektromagnetisches Ventil, vorzugsweise ein Solenoidventil, auf. Die Erfindung ist jedoch nicht auf diese Art Ventil beschränkt. Das Hauptventil kann beispielsweise auch direkt gesteuert sein.

Das Hauptventil 1 weist ein Ventilgehäuse 10 mit einem Steuerraum 13, einem Prozessdruck-Eingangskanal 15 und einen Prozessdruck-Ausgangskanal 16 auf. Ein Schaltkolben 12 ist verschiebbar im Ventilgehäuse 10 gehalten, wobei er mittels HochdruckDichtungen 14 gegenüber dem Ventilgehäuse 10 gedichtet ist. Üblicherweise ist er rotationssymmetrisch ausgebildet. Der Schaltkolben 12 liegt im geschlossenen Zustand des Hauptventils 1, wie dies in Figur 15 gezeigt ist, auf einem Ventilsitz 17 auf und verschliesst dadurch eine Verbindung zwischen dem Prozessdruck-Eingangskanal 15 und dem Prozessdruck-Ausgangskanal 16. Im geöffneten Zustand gemäss Figur 16 ist diese Verbindung offen. Im geöffneten Zustand des Hauptventils 1 kann somit das Prozessgas von der hier nicht dargestellten Prozessgasquelle in den hier ebenfalls nicht dargestellten Vorformling oder Rohling gelangen und diesen zur gewünschten Endform des Hohlkörpers, insbesondere der PP oder PET Flasche, aufblasen.

Der Steuerraum 13 des Hauptventils 1 ist über eine Steuerluftleitung 30 mit einer Steuerluftquelle 3 verbunden. Die unter Druck stehende Steuerluft wirkt im Steuerraum 13 auf eine Steuerfläche 121 eines Kolbenkopfes 120 des Schaltkolbens 12. Der dadurch entstehende Steuerdruck erzeugt eine Kraft auf den Schaltkolben12, die grösser ist als die über den Prozessdruck-Eingangskanal 15 auf die gegenüberliegende Seite des Schaltkolbens 12 wirkende Kraft des Prozessgasdruckes. Dadurch wird der Schaltkolben 12 in seiner geschlossenen Stellung gehalten.

Wird der Steuerdruck abgesenkt, so drückt das Prozessgas den Schaltkolben 12 nach oben und das Hauptventil 1 wird geöffnet.

Das Umschalten des Steuerdrucks erfolgt mittels des genannten Pilotventils 2. Dieses ist, wie hier dargestellt, über die Steuerluftleitung 30 mit dem Steuerraum 13 verbunden. Es ist ferner über einen Steuerlufteingangskanal 300 mit der Steuerluftquelle 3 und über einen Steuerluftausgangskanal 301 mit der Umgebung oder einer Steuerluftrückgewinnungseinheit verbunden. Zur schnellen Entlüftung des Steuerraums kann, wie hier dargestellt, ein Steuerluftschaltraum 31 vorhanden sein, welcher über einen zusätzlichen Entlüftungskanal 32 minimale Schaltzeiten gewährleistet. Ein derartiges Prozessventil ist beispielsweise in WO 2015/010216 A1 detailliert beschrieben. Es dient lediglich als Beispiel, um mögliche Funktionen des Hauptventils und des mindestens einen Pilotventils zu verstehen.

In anderen Ausführungsformen dient der mittels des Pilotventils 2 betätigte Steuerdruck zum Öffnen des Hauptventils 1. In weiteren Ausführungsformen dient ein erstes Pilotventil mit einem ersten Steuerdruck zum Öffnen und ein zweites Pilotventil mit einem zweiten Steuerdruck zum Schliessen des Hauptventils 1. In weiteren Ausführungsformen erfolgt die Ansteuerung mittels eines 5/2 Wege Pilotventils, bei dem wechselwirkend entweder oben be- und unten entlüftet wird oder umgekehrt.

In Figur 4 ist ein Beispiel eines Pilotventils 2 dargestellt, wie es typischerweise in derartigen Prozessventilen eingesetzt ist. Dies ist lediglich ein Beispiel. Es lassen sich auch andere Arten von Pilotventilen einsetzen. Das hier dargestellte Pilotventil 2 weist ein Gehäuse auf, in welchem eine Elektromagnetspule 22 und einen die Spule 22 durchsetzenden Stössel 23 angeordnet ist. An einem Ende des Stössels 23 ist eine Feder 24 angeordnet. Der Stössel 23 ist entgegen der Kraft dieser Feder 24 mittels des Elektromagneten bewegbar. Durch die Bewegung des Stössels 24 wird eine Verbindung zur Druckversorgung freigegeben. Der Anschluss zur Druckversorgung ist mit dem Bezugszeichen 25 versehen. Im unbelasteten Zustand ist eine Verbindung zum Steuerraum des Hauptventils geschaffen. Der entsprechende Ausgang ist mit dem Bezugszeichen 26 versehen. Vorzugsweise ist zudem ein Ausgang 27 zu einem Schalldämpfer vorgesehen.

Für die Herstellung eines Hohlkörpers aus einem Rohling sind üblicherweise mehr als ein Prozessventil notwendig. Üblicherweise sind ein Vorblasventil und mindestens ein Hauptblasventil vorhanden. Vorzugsweise sind ferner mindestens ein Rekuperationsventil und/oder ein Entlüftungsventil vorhanden. Diese Ventile sind, wie in Figur 3 dargestellt, vorzugsweise in einem gemeinsamen Ventilblock 4 angeordnet, welcher mindestens einen, vorzugsweise mehrere Prozessdruck-Eingangs- und Ausgangskanäle zur Verbindung mit der Prozessgasquelle aufweist. Mittels des Prozessgases wird der Vorformling in die gewünschte Form des endgültigen Hohlkörpers aufgeblasen. Der Ventilblock 4 weist hierfür eine Blasdüse 40 auf, an welche der aufzublasende Rohling oder Vorformling 7 befestigt wird.

Der Ventilblock 4 weist ferner mindestens einen Drucksensor 41 auf, der den Druck des Prozessgases im Bereich der Düse 40 misst. Dies entspricht mit minimaler und somit vernachlässigbarer Verzögerung dem Druck, welcher im Innern des Rohlings 7 herrscht. Der Drucksensor 41 bildet Teil der oben genannten Sensoreinheit 9. Je nach Ausführungsform sind noch weitere Sensoren vorhanden.

Die einzelnen Pilotventile 2 der einzelnen Prozessventile sind über jeweilige elektronische Steuerungsanschlüsse 20 mit einer Aktorbox 5 verbunden, die wiederum direkt oder über weitere Steuerungsuntereinheiten mit der Maschinensteuerung 6 verbunden ist oder die bereits selber Teil der Maschinensteuerung 6 ist. Die Aktorbox 5 weist je nach Ausführungsform einen Prozessor und andere Mittel zur Steuerung und/oder Datenverarbeitung auf. Die Aktorbox 5 und die Maschinensteuerung 6 werden im Folgenden als Steuersystem bezeichnet.

Das Steuersystem steuert die Pilotventile 2 und somit die Prozessventile. Es erhält zudem die Messdaten des mindestens einen Drucksensors 41 und der anderen allfälligen Sensoren, die Daten über den Blasprozess liefern.

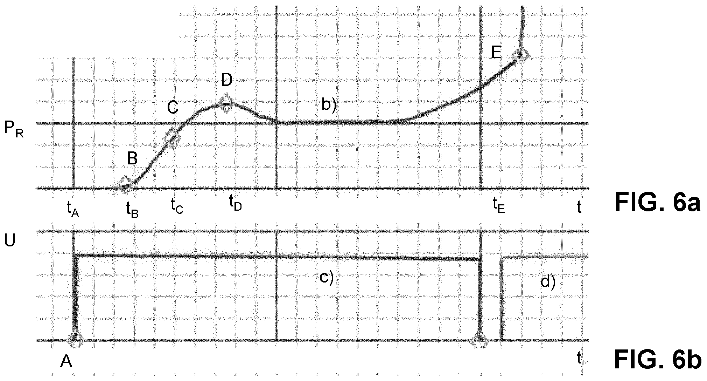

In den Figuren 6a und 6b ist ein Ausschnitt eines typischen Prozessverlaufes zum Zeitpunkt des Prozessbeginns mit dem Vorblasen dargestellt. Figur 6a zeigt dabei in Kurve b) zeigt den Druck P_{R}, welcher vom Drucksensor 41 im Ventilblock 4 im Bereich des Innenraums des Rohlings als Funktion der Zeit t gemessen wurde. In Figur 6b ist das bei diesem Prozess gemessene oder angelegte Spannungssignal U des Pilotventils 2 als Funktion derselben Zeit t wie in der Figur 6a dargestellt. Dabei zeigt die Kurve c) das Spannungssignal U des Pilotventils 2 für das Vorblasventil und die Kurve d) das Spannungssignal U des Pilotventils 2 für das Hauptblasventil.

Die Zusammenschau der Figuren 6a und 6b zeigt das Druckverhalten P_{R} im Bereich des Innenraums des Rohlings im Laufe des Prozesses auf. Zum Zeitpunkt A wird die Spannung U an das Pilotventil des Vorblasventils angelegt. Das Pilotventil reagiert zeitverzögert und somit steigt der Innendruck P_{R} im Rohling zeitverzögert an. Zum Zeitpunkt t_{B} in der Kurve b) der Figur 6a hebt sich erstmals der Druckanstieg genügend deutlich vom Messrauschen ab. Der Druck in Punkt C zum Zeitpunkt tc in der Kurve b) gemäss Figur 6a beträgt circa 50% des ersten Druckanstiegs (d.h. des Druckanstiegs bis zur ersten Senkung des Drucks). Die Differenz zwischen dem Zeitpunkt tc und t_{B} gibt einen Hinweis darauf, dass sich das Hauptventil zeitgerecht vollständig geöffnet hat.

In Punkt D zum Zeitpunkt t_{D} der Kurve b) beginnt sich der Rohling auch radial auszudehnen. Dies hat erfahrungsgemäss zur Folge, dass der Druck P_{R} im Innern des Rohlings kurzfristig sinkt, wie dies in Kurve b) gut erkennbar ist. Es folgt eine Zeitdauer mit annähernd gleichbleibendem Druck P_{R} im Innern des Rohlings mit einem nachfolgenden Anstieg. Auch dies ist in Kurve b) gut erkennbar.

Die Abschaltung des Pilotventils des Vorblasventils erfolgt ebenfalls zeitverzögert. Das kurz darauf erfolgte Einschalten des Hauptblasventils (Kurve d) in Figur 6b) verläuft wiederum zeitverzögert. Punkt E in der Kurve b) zeigt den Druckanstieg nach dem Einschalten des Hauptblasventils. Wie in Kurve b) erkennbar ist, folgt der massive Anstieg des Innendrucks P_{R} im teilweise aufgeblasenen Rohling zeitverzögert.

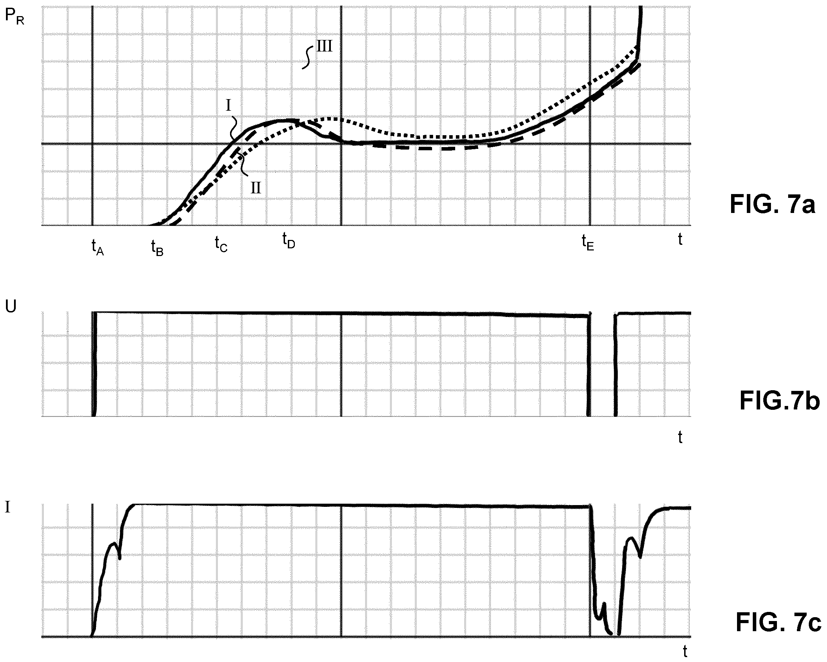

In den Figuren 7a bis 7c ist ein ähnlicher Ausschnitt eines Blasprozesses dargestellt, wobei drei verschiedene Blasprozesse in der Graphik zeitlich übereinander gelegt wurden. Figur 7a zeigt den Druckverlauf P_{R}, gemessen im Bereich des Rohlings, d.h. des Vorformlings, während dem Vorblasprozess und zu Beginn des Blasprozesses mit erhöhtem Druck. Figur 7b zeigt die am Pilotventil 2 angelegte Spannung U als Funktion der Zeit. Figur 7c zeigt zeitgleich den am Pilotventil 2 gemessenen Strom I als Funktion der Zeit.

Die Zeitangaben t_{A}, t_{B}, t_{C}, t_{D} und t_{E} beziehen sich auf die ausgezogene Kurve I eines ersten Blasprozesses. Bei einem zweiten Blasprozess, dargestellt mit der gestrichelten Kurve II, ist der Blasbeginn verzögert, beispielsweise, weil der Schaltkolben 12 des Hauptventils 1 zu spät reagiert und sich zu spät öffnet. Bei einem dritten Blasprozess, dargestellt mit der gepunkteten Kurve III, erfolgt der Blasbeginn zwar korrekt, der Druckanstieg ist jedoch verzögert, beispielsweise, weil sich der Schaltkolben 12 des Hauptventils 1 zu langsam bewegt.

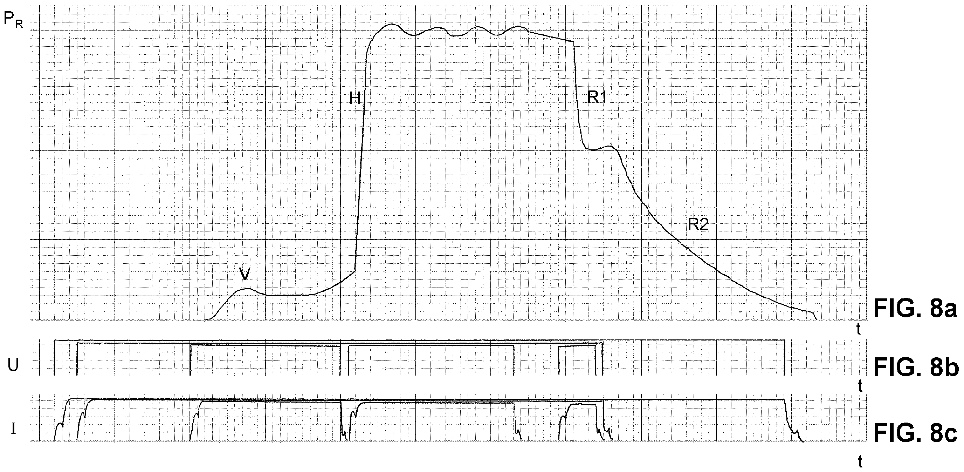

Die drei dargestellten Kurven sind in einer Variante des erfindungsgemässen Verfahrens durch Druckmessung in derselben Blasstation bei drei zeitlich voneinander getrennten Blasvorgängen entstanden, d.h. dasselbe Verhalten derselben Ventile 1 wurde zu verschiedenen Zeiten festgehalten. In einer anderen Variante werden die Druckkurven von verschiedenen Blasstationen derselben Blaseinheit miteinander verglichen. In diesem Fall sind diese Kurven möglichst zeitnah zueinander entstanden. Üblicherweise werden die Blasstationen mit einer sehr kleinen zeitlichen Differenz zueinander betrieben. In den Figuren 8a bis 8c ist ein vollständiger Blasprozess einer einzigen Blasstation dargestellt. Wiederum ist in Figur 8a der Druck P_{R} im Rohling als Funktion der Zeit t dargestellt, in Figur 8b die an den einzelnen Pilotventilen angelegte Spannung U als Funktion derselben Zeit t und in Figur 8c der Strom I der Pilotventile als Funktion derselben Zeit t dargestellt.

Im Bereich V findet das Vorblasen mit einem Vorblasventil statt und im Bereich H das Blasen mit erhöhtem Druck und unter Verwendung eines Blasventils. Im Bereich R1 wird über ein erstes Rekuperationsventil rekuperiert und im Bereich R2 wird über ein zweites Rekuperationsventil oder ein Entlüftungsventil weiterhin rekuperiert oder direkt in die Umwelt entlüftet. Zum Schluss wird der aufgeblasene Hohlkörper aus der Blasform ausgeworfen. Dies ist eine wohlbekannte Druckkurve eines typischen Blasprozesses. Diese Druckkurven können auch noch weitere Bereiche aufweisen, beispielsweises wenn der Blasprozess mit zwei oder mehreren zeitlich nacheinander geschalteten Blasventilen mit jeweils höherem Druck als die vorherige Stufe betrieben wird.

Diese Kurven können in der zentralen Steuerung 6 oder in der dezentralen Datenverarbeitungseinheit 8 anhand der gemessenen Sensorwerte aufgezeichnet werden. Die Werte werden vorzugsweise in sehr kleinen Zeitabständen gemessen, beispielsweise in 0.1 ms bis 1 ms. Vorzugsweise werden die Sensorwerte somit hochfrequent erfasst, beispielsweise 1`000 bis 10'000 mal pro Sekunde. Dadurch lassen sich relativ genaue Kurven abbilden.

Diese Kurve muss jedoch nicht aufgezeichnet werden. Zusätzlich oder vorzugsweise alternativ zu einer derartigen Aufzeichnung werden Tabellen der Messwerte erstellt. Die Tabellenform erleichtert die statistische Verarbeitung der Daten.

Die Werte in den Tabellen bzw. in den Kurven derselben Blasstation für verschiedene abgeschlossene Blaszyklen (d.h. eines Blasvorgangs vom Vorblasen bis zum Auswerfen des hergestellten Hohlkörpers) können miteinander verglichen werden und/oder die Werte in den Tabellen bzw. in den Kurven der verschiedenen Blasstationen der Blaseinheit für denselben Blaszyklus oder für nahe beieinanderliegende Blaszyklen können miteinander verglichen werden. Dabei können bei der weiteren Auswertung die Werte in den Tabellen bzw. in den Kurven eines gesamten Blasvorgangs berücksichtigt werden oder lediglich ein Abschnitt davon oder auch nur markante Punkte in den Kurven und Tabellen, wie beispielsweise Maxima, Minima und lineare Bereiche.

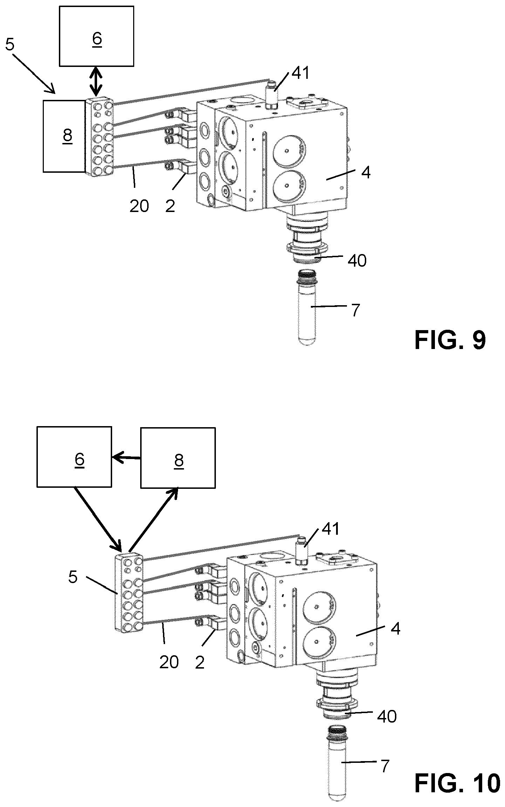

In den Figuren 9 bis 11 ist ein Teil der Blaseinheit dargestellt, wobei man das Zusammenwirken der zentralen Steuereinheit 6 und der dezentralen Datenverarbeitungseinheit 8 erkennt. Die zentrale Steuereinheit 6 bildet die Maschinensteuerung. Sie ist in diesen Abbildungen mit einer Aktorbox 5 und einem Ventilblock 4 einer Blasstation dargestellt. Sie ist über entsprechende Verbindungen, hier ein BUS mit mehreren derartigen Blasstationen verbunden, beispielsweise mit vierzig Stationen.

In der Ausführungsform gemäss Figur 9 bildet die Aktorbox 5 die Datenverarbeitungseinheit 8. Sie sammelt die Sensorwerte, bildet diese in Kurven und/oder Tabellen ab, wertet sie statistisch aus und liefert über das BUS System der zentralen Steuereinheit 6 das Ergebnis, beispielsweise einen Bericht über den Ventilzustand, eine Empfehlung zur Korrektur bzw. einen neuen Sollwert für die weitere Steuerung. Vorzugsweise weist die Aktorbox 5 in diesem Fall auch Steuerfunktionen auf. In dieser Ausführungsform lassen sich die Daten derselben Blasstation zu verschiedenen Zeitpunkten miteinander vergleichen, nicht jedoch die Daten verschiedener Blasstationen.

In der Ausführungsform gemäss Figur 10 ist zusätzlich zur Aktorbox 5, welche je nach Variante der Ausführungsform gemäss den eigenen und/oder von der Maschinensteuerung erhaltenen Steuerbefehle den Ventilblock 4 betätigt, ein zusätzliches Modul in Form einer zentralen Datenverarbeitungseinheit vorhanden. Diese bildet gemeinsam mit der Maschinensteuerung die zentrale Steuereinheit. Die zentrale Datenverarbeitungseinheit 8 sammelt die Daten aller Blasstationen dieser Blaseinheit, vergleicht sie miteinander, wertet sie statistisch aus und sendet das Ergebnis an die Maschinensteuerung, beispielsweise einen Bericht über den Ventilzustand, eine Empfehlung zur Korrektur bzw. einen neuen Sollwert für die weitere Steuerung. In dieser Ausführungsform lassen sich nun die Daten einer einzigen Blasstation miteinander vergleichen und auch die Daten unterschiedlicher Blasstationen.

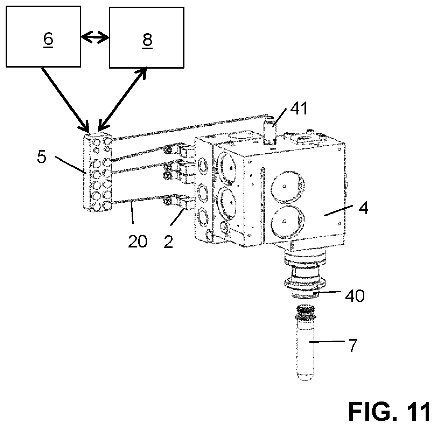

In der Ausführungsform gemäss Figur 11 sind derselbe Aufbau und dieselbe Funktion wie in der Ausführungsform gemäss Figur 10 vorhanden. Zusätzlich weist die zentrale Datenverarbeitungseinheit jedoch Steuerungsfunktionen auf. Die Maschinensteuerung liefert die Rezeptur, d.h. die Parameter zur Herstellung des gewünschten Hohlkörpers, an diese zentrale Datenverarbeitungseinheit und diese übermittelt entsprechende Steuerbefehle an die diversen Aktorboxen 5 der einzelnen Blasstationen weiter.

Das erfindungsgemässe Verfahren ermöglicht ein frühes Erkennen von Fehlfunktionen in Blasprozessen.

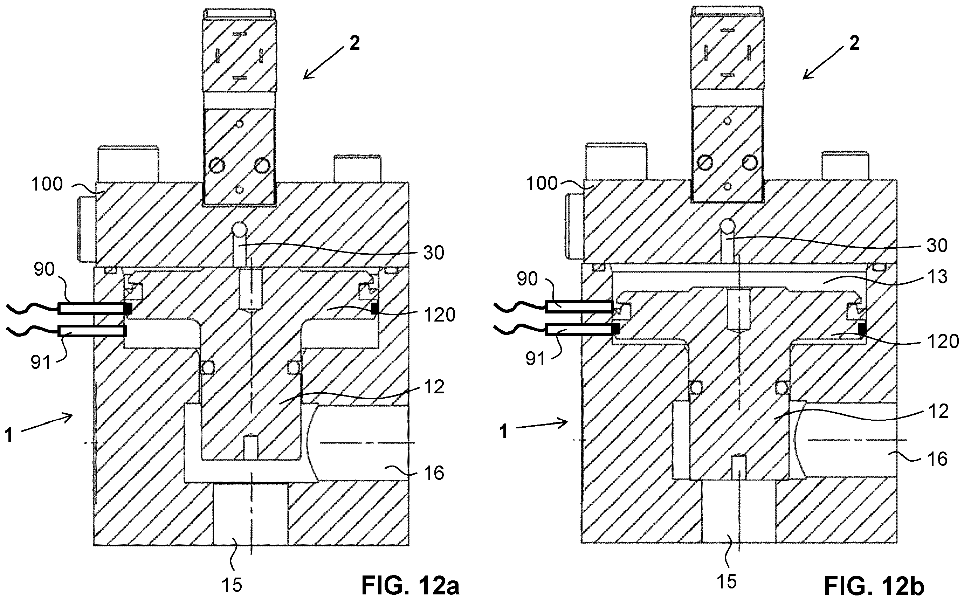

In den Figuren 12 bis 14 sind Alternativen oder Ergänzungen zur Druckmessung im Rohling und im Hohlkörper gezeigt. Die hier vorgestellten Messverfahren und Vorrichtungen dienen dazu, die Ventile möglichst genau und fehlerfrei zu steuern, ohne den Blasprozess als Ganzes betrachten zu müssen. Dies hat den Vorteil, dass Fehler einfacher erkannt werden können, da die Messungen nicht einer Vielzahl von sich gegenseitigen beeinflussenden Prozessfaktoren ausgesetzt sind.

In den Figuren 12 bis 14 ist wiederum ein pneumatisch vorgesteuertes Hauptventil 1 dargestellt, welches als Prozessventil in einem Blasverfahren eingesetzt wird. Es kann beispielsweise ein Vorblasventil, ein Hauptblasventil, ein Rekuperationsventil oder ein Entlüftungsventil sein. Vorzugsweise ist es wiederum mittels mindestens eines Pilotventils 2, insbesondere eines Solenoidventils, vorgesteuert. Es wurden dieselben Bezugszeichen verwendet wie beim Ventil in den Figuren 1 und 2. Gleiche Teile sind mit denselben Bezugszeichen versehen. Der obere Teil des Ventilgehäuses 10, der den oberen Abschluss des Steuerraums 13 bildet, ist hier mit dem Bezugszeichen 100 versehen.

Erfindungsgemäss sind nun im oder am Ventilgehäuse 10 Sensoren angebracht, welche die Position und/oder die Bewegung des Schaltkolbens 12 direkt überwachen und/oder über Reaktionen, welche der Schaltkolben 12 verursacht, Schlüsse über seine Position und/oder seine Bewegung ziehen.

In der Ausführungsform gemäss den Figuren 12a und 12b sind zwei Positionssensoren 90, 91 vorhanden, welche die Position des Schaltkolbens in seiner offenen und in seiner geschlossenen Stellung detektieren. Ein Positionssensor würde genügen, zwei Sensoren ermöglichen jedoch eine zuverlässigere Messung. In Figur 12a ist der Schaltkolben in offener Stellung dargestellt und der erste Positionssensor 90 detektiert den Schaltkolben 12.

In Figur 12b ist das Ventil in geschlossener Stellung dargestellt und der zweite Positionssensor 91 detektiert den Schaltkolben 12. Somit lässt sich der Zeitpunkt des Beginns der Kolbenbewegung sowie der Zeitpunkt des Erreichens der offenen Endposition des Kolbens detektieren. Als Positionssensoren 90, 91 eignen sich beispielsweise Näherungssensoren, beispielsweise optische Sensoren oder Hallsensoren. Eine Markierung am Kolben, in den Zeichnungen schwarz dargestellt, erleichtert die Detektion der Position.

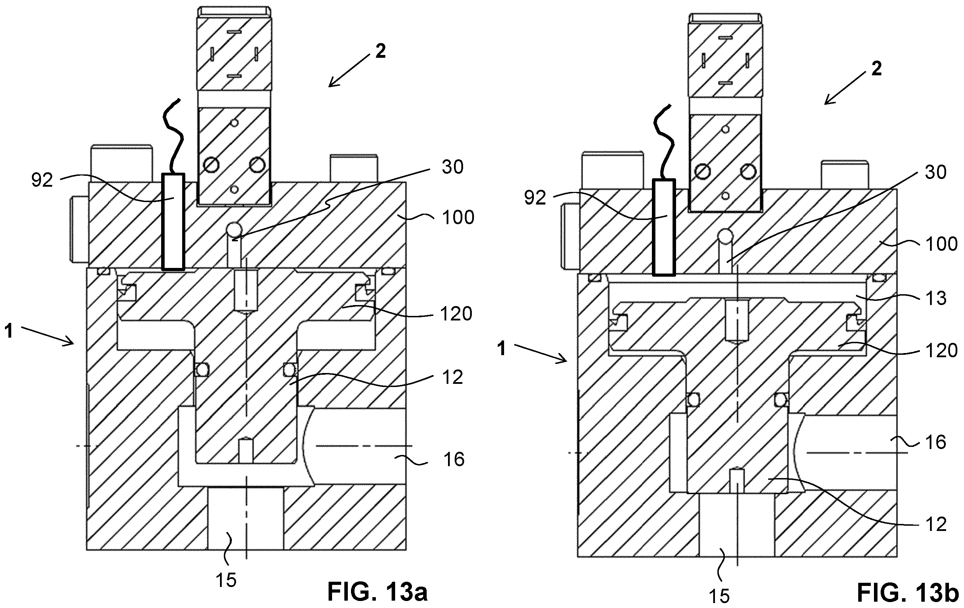

In der Ausführungsform gemäss den Figuren 13a und 13b ist ein Wegmesssensor 92 vorhanden, welcher den Weg des Schaltkolbens 12 misst. Vorzugweise ist der Wegmesssensor 92 im Steuerraum 13 angeordnet. Figur 13a zeigt wiederum die Situation bei geöffnetem Ventil und Figur 13b bei geschlossenem Ventil. Als Sensoren lassen sich beispielsweise Wegmesssensoren mit analogem Ausgangssignal, Ultraschallsensoren und Lastertriangulationssensoren einsetzen.

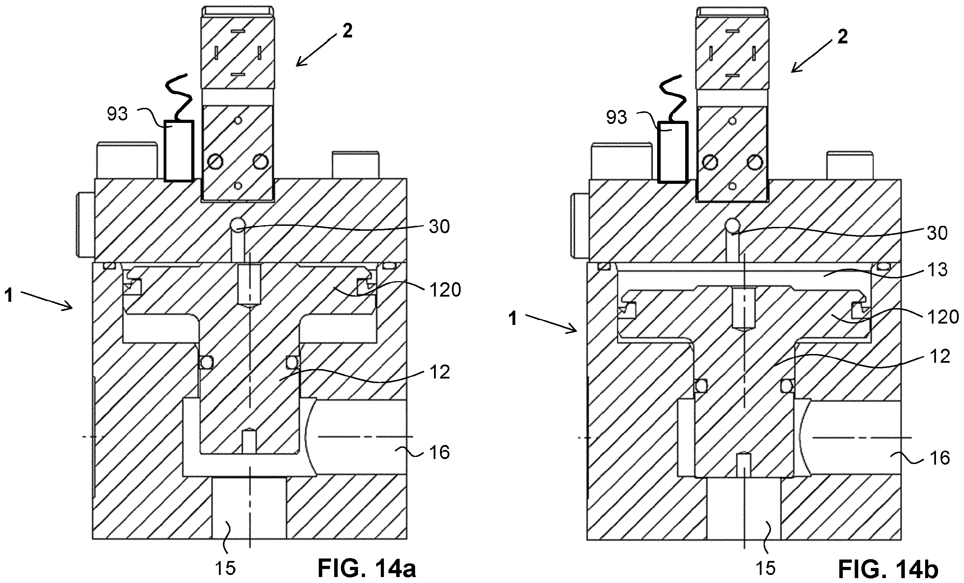

In der Ausführungsform gemäss den Figuren 14a und 14b ist im Ventilgehäuse 10 ein Vibrationssensor 93 angeordnet. Wird der Schaltkolben 12 bewegt, so vibriert das Gehäuse 10 und der Sensor 93 reagiert. Schaltet das Ventil nicht, zu langsam oder verspätet, wird dies vom Sensor 93 verzeichnet. Sind mehrere Ventile in einem gemeinsamen Ventilblock angeordnet, genügt üblicherweise ein einziger Vibrationssensor 93 für alle diese Ventile, da sie üblicherweise zeitlich nacheinander betätigt werden und somit das Sensorsignal eindeutig jeweils einem spezifischen Ventil zugeordnet werden kann. Anstelle eines Vibrationssensors lässt sich auch ein Beschleunigungssensor einsetzen.

**BEZUGSZEICHENLISTE**

| | | | |
|---|---|---|---|
| 1 | Hauptventil | 4 | Ventilblock |
| 10 | Ventilgehäuse | 40 | Blasdüse |
| 100 | oberer Teil des Ventilgehäuses | 41 | Drucksensor |
| 12 | Schaltkolben | | |
| 120 | Kolbenkopf | 5 | Aktorbox |
| 121 | Steuerfläche | | |
| 13 | Steuerraum | 6 | Maschinensteuerung/Zentrale |
| 14 | Dichtung | | Steuerung |
| 15 | Prozessdruck-Eingangskanal | | |
| 16 | Prozessdruck-Ausgangskanal | 7 | Vorformling |
| 17 | Ventilsitz | | |
| | | 8 | dezentrale |
| 2 | Pilotventil | | Datenauswertungseinheit |
| 20 | Steuerungsanschluss | | |
| 21 | Steckverbindung zur | 90 | erster Positionssensor |
| | Stromquelle | 91 | zweiter Positionssensor |
| 22 | Elektromagnetspule | 92 | Wegmesssensor |
| 23 | Stössel | 93 | Vibrationssensor |
| 24 | Feder | | |
| 25 | Anschluss zur Druckversorgung | BE | Blaseinheit |
| 26 | Ausgang zum Steuerraum des Prozessventils | BS1 - BS9 | Blasstation |
| 27 | Ausgang zum Schalldämpfer | | |
| 3 | Steuerluftquelle | | |
| 30 | Steuerluftleitung | | |
| 300 | Steuerlufteingangskanal | | |
| 301 | Steuerluftausgangskanal | | |
| 31 | Steuerluftschaltraum | | |
| 32 | Entlüftungskanal | | |

## Patentansprüche

1. Verfahren zur Überwachung einer Blaseinheit (BE) von mehreren Blasstationen (BS1-BS9) zur Herstellung eines Hohlkörpers,
wobei jede Blasstation (BS1-BS9) mindestens eine Prozessventileinheit zum Zuführen eines Prozessfluids in einen Vorformling (7) des Hohlkörpers unter Prozessdruck aufweist und wobei die Prozessventileinheit mindestens ein Ventil (1) aufweist,
und wobei jeder Blasstation (BS1-BS9) mindestens ein Sensor (41, 90, 91, 92, 93) zugeordnet ist,
wobei das Verfahren mindestens folgende Schritte aufweist:
- Erfassen mindestens eines ersten Sensorwerts in jeder Blasstation (BS1-BS9),
- Übermitteln eines ersten Datenwerts, der dem mindestens einen erfassten ersten Sensorwerts jeder Blasstation (BS1-BS9) zugeordnet ist, an eine Datenverarbeitungseinheit (6, 8) und
- Ermitteln eines ersten statistischen Mittelwerts der übermittelten ersten Datenwerte in der Datenverarbeitungseinheit (6, 8).

2. Verfahren nach Anspruch 1, wobei das Verfahren ferner den Schritt umfasst:
- Definition des ersten statistischen Mittelwerts als Sollwert.

3. Verfahren nach einem der Ansprüche 1 oder 2, wobei der übermittelte erste Datenwert der erfasste erste Sensorwert ist.

4. Verfahren nach einem der Ansprüche 1 bis 3, wobei die Blaseinheit (BE) eine zentrale Steuerung (6) aufweist und wobei der erste statistische Mittelwert in der zentralen Steuerung gespeichert (6) wird.

5. Verfahren nach Anspruch 4, wobei die Datenverarbeitungseinheit Teil der zentralen Steuerung (6) ist.

6. Verfahren nach einem der Ansprüche 1 bis 5, wobei die Datenverarbeitungseinheit durch mehrere dezentrale Datenverarbeitungseinheiten (8) gebildet ist und diese Teil von dezentralen Steuerungseinheiten (5) sind.

7. Verfahren nach Anspruch 6, wobei der erste statistische Mittelwert in den dezentralen Steuerungseinheiten (5) gespeichert wird.

8. Verfahren nach einem der Ansprüche 1 bis 7, wobei das Verfahren mindestens die folgenden weiteren Schritte aufweist:
- Ermitteln, ob einzelne übermittelte erste Sensorwerte eine vorgegebene Abweichung vom ersten statistischen Mittelwert aufweisen, und,
- falls ein einzelner erster Sensorwert eine derartige Abweichung aufweist, Identifizierung der zum Sensorwert zugehörigen Blasstation (BS1-BS9).

9. Verfahren nach einem der Ansprüche 1 bis 8, wobei das Verfahren mindestens die folgenden weiteren Schritte aufweist:
- Erfassen mindestens eines zweiten Sensorwerts in jeder Blasstation (BS1-BS9) in einem zweiten Blasprozess,
- Übermitteln des mindestens einen erfassten zweiten Sensorwerts jeder Blasstation (BS1-BS9) an die Datenverarbeitungseinheit (6, 8),
- Ermitteln eines zweiten statistischen Mittelwerts der übermittelten zweiten Sensorwerte in der Datenverarbeitungseinheit (6, 8),
- und vorzugsweise, bei Abweichung des zweiten statistischen Mittelwerts vom ersten statistischen Mittelwert, Definition des zweiten statistischen Mittelwerts als Sollwert.

10. Verfahren nach Anspruch 9, wobei das Verfahren mindestens die folgenden weiteren Schritte aufweist:
- entweder Ermitteln, ob einzelne übermittelte zweite Sensorwerte eine vorgegebene Abweichung vom ersten statistischen Mittelwert aufweisen oder Ermitteln, ob einzelne übermittelte zweite Sensorwerte eine vorgegebene Abweichung vom zweiten statistischen Mittelwert aufweisen,
und,
- falls ein einzelner zweiter Sensorwert eine derartige Abweichung aufweist, Identifizierung der zum Sensorwert zugehörigen Blasstation (BS1-BS9).

11. Verfahren nach Anspruch 10, wobei nach Ermittlung des zweiten statistischen Mittelwerts zuerst vom zweiten statistischen Mittelwert oder alternativ vom ersten statistischen Mittelwert abweichende einzelne zweite Sensorwerte ermittelt werden und anschliessend mit den restlichen zweiten Sensorwerten ein neuer zweiter statistischer Mittelwert gebildet wird und bei Abweichung von diesem neuen zweiten statistischen Mittelwert vom ersten statistischen Mittelwert dieser neue zweite statistische Mittelwert als Sollwert für die Blasstationen (BS1-BS9) definiert wird.

12. Verfahren nach einem der Ansprüche 9 bis 11, wobei der übermittelte zweite Datenwert der erfasste zweite Sensorwert ist.

13. Verfahren nach Anspruch 12, wobei der übermittelte erste Datenwert die Differenz zwischen dem erfassten ersten Sensorwert und dem gespeicherten Sollwert ist.

14. Verfahren nach Anspruch 7 und einem der Ansprüche 12 oder 13, wobei der übermittelte zweite Datenwert die Differenz zwischen dem erfassten zweiten Sensorwert und dem gespeicherten Sollwert ist.

15. Verfahren nach einem der Ansprüche 1 bis 14, wobei der mindestens eine Sensor mindestens einen der folgenden Parameter misst: Druck im herzustellenden Hohlkörper, Druck in einem Fluidtank, Strom eines Pilotventils, Position oder Bewegung des Kolbens eines Prozessventils.

16. Steuersystem einer Blaseinheit mit mehreren Blasstationen, wobei die Blaseinheit eine zentrale Steuereinheit aufweist und wobei jeder Blasstation mindestens ein Sensor (41, 90, 91, 92, 93) zugeordnet ist,
wobei die Blaseinheit (BE) mindestens eine Datenverarbeitungseinheit (6, 8) aufweist, wobei die mindestens eine Datenverarbeitungseinheit (6, 8) Auswertemittel aufweist, um aus Daten, die auf den von den Sensoren erhaltenen Sensorwerten basieren, einen statistischen Mittelwert zu bilden, wobei die Blaseinheit (BE) Speichermittel zur Speicherung des ermittelten statistischen Mittelwerts als Sollwert aufweist und wobei das Steuersystem zur Durchführung des Verfahrens gemäss einem der Ansprüche 1 bis 15 ausgebildet ist.

17. Steuersystem nach Anspruch 16, wobei eine Maschinensteuerung vorhanden ist, die mit der mindestens einen Datenverarbeitungseinheit gemeinsam eine zentrale Steuereinheit (6) bildet.

18. Computerprogrammprodukt zur Durchführung des Verfahrens gemäss einem der Ansprüche 1 bis 15.

## Claims

1. A method for monitoring a blow-moulding unit (BE) of a plurality of blow-moulding stations (BS1-BS9) for producing a hollow body,
wherein each blow-moulding station (BS1-BS9) has at least one process valve unit for feeding a process fluid into a preform (7) of the hollow body under process pressure, and wherein the process valve unit has at least one valve (1),
and wherein each blow-moulding station (BS1-BS9) is associated with at least one sensor (41, 90, 91, 92, 93),
wherein the method has at least the following steps:
- detecting at least one first sensor value in each blow-moulding station (BS1-BS9),
- transmitting a first data value, which is associated with the at least one detected first sensor value of each blow-moulding station (BS1-BS9), to a data processing unit (6, 8), and
- determining a first statistical average of the transmitted first data values in the data processing unit (6, 8).

2. The method as claimed in claim 1, wherein the method further comprises the step of:
- defining the first statistical average as a setpoint.

3. The method as claimed in either of claims 1 or 2, wherein the transmitted first data value is the detected first sensor value.

4. The method as claimed in any of claims 1 to 3, wherein the blow-moulding unit (BE) has a central controller (6), and wherein the first statistical average is stored in the central controller (6).

5. The method as claimed in claim 4, wherein the data processing unit is part of the central controller (6).

6. The method as claimed in any of claims 1 to 5, wherein the data processing unit is formed by a plurality of decentralized data processing units (8) and these are part of decentralized control units (5).

7. The method as claimed in claim 6, wherein the first statistical average is stored in the decentralized control units (5).

8. The method as claimed in any of claims 1 to 7, wherein the method has at least the following further steps:
- determining whether individual transmitted first sensor values have a predetermined deviation from the first statistical average, and,
- if an individual first sensor value has such a deviation, identification of the blow-moulding station (BS1-BS9) associated with the sensor value.

9. The method as claimed in any of claims 1 to 8, wherein the method has at least the following further steps:
- detecting at least one second sensor value in each blow-moulding station (BS1-BS9) in a second blowing process,
- transmitting the at least one detected second sensor value of each blow-moulding station (BS1-BS9) to the data processing unit (6, 8),
- determining a second statistical average of the transmitted second sensor values in the data processing unit (6, 8),
- and preferably, in case of deviation of the second statistical average from the first statistical average, defining the second statistical average as a setpoint.

10. The method as claimed in claim 9, wherein the method has at least the following further steps:
- determining whether individual transmitted second sensor values have a predetermined deviation from the first statistical average, or determining whether individual transmitted second sensor values have a predetermined deviation from the second statistical average,
and,
- if an individual second sensor value has such a deviation, identification of the blow-moulding station (BS1-BS9) associated with the sensor value.

11. The method as claimed in claim 10, wherein, after the second statistical average has been determined, individual second sensor values which deviate from the second statistical average or alternatively from the first statistical average are first of all determined, and then a new second statistical average is formed with the remaining second sensor values, and, in the event of a deviation of this new second statistical average from the first statistical average, this new second statistical average is defined as a setpoint for the blow-moulding stations (BS1-BS9).

12. The method as claimed in any of claims 9 to 11, wherein the transmitted second data value is the detected second sensor value.

13. The method as claimed in claim 12, wherein the transmitted first data value is the difference between the detected first sensor value and the stored setpoint.

14. The method as claimed in claim 7 and either of claims 12 or 13, wherein the transmitted second data value is the difference between the detected second sensor value and the stored setpoint.

15. The method as claimed in any of claims 1 to 14, wherein the at least one sensor measures at least one of the following parameters: pressure in the hollow body to be produced, pressure in a fluid tank, current of a pilot valve, position or movement of the piston of a process valve.

16. A control system of a blow-moulding unit having a plurality of blow-moulding stations, wherein the blow-moulding unit has a central control unit and wherein each blow-moulding station is associated with at least one sensor (41, 90, 91, 92, 93),
wherein the blow-moulding unit (BE) has at least one data processing unit (6, 8),
wherein the at least one data processing unit (6, 8) has evaluation means for forming a statistical average from data which are based on the sensor values obtained from the sensors, wherein the blow-moulding unit (BE) has storage means for storing the determined statistical average as a setpoint and wherein the control system is configured to perform the method according to any of claims 1 to 15.

17. The control system as claimed in claim 16, wherein there is a machine controller which, together with the at least one data processing unit, forms a central control unit (6).

18. A computer program product for carrying out the method as claimed in any of claims 1 to 15.

## Revendications

1. Procédé de contrôle d'une unité de soufflage (BE) à partir de plusieurs postes de soufflage (BS1-BS9) destinés à la fabrication d'un corps creux, chaque poste de soufflage (BS1-BS9) comportant au moins une unité à soupapes de processus destinée à amener un fluide de processus dans une préforme (7) du corps creux sous pression de processus et l'unité à soupapes de processus comportant au moins une soupape (1), et chaque poste de soufflage (BS1-BS9) étant associé à au moins un capteur (41, 90, 91, 92, 93),
le procédé comportant au moins les étapes suivantes :
- acquérir au moins une première valeur de capteur dans chaque poste de soufflage (BS1-BS9),
- transmettre une première valeur de données, qui est associée à l'au moins une première valeur de capteur acquise de chaque poste de soufflage (BS1-BS9), à une unité de traitement de données (6, 8) et
- déterminer une première valeur moyenne statistique des premières valeurs de données transmises dans l'unité de traitement de données (6, 8).

2. Procédé selon la revendication 1, le procédé comprenant en outre l'étape suivante :
- définir la première moyenne statistique comme valeur cible.

3. Procédé selon l'une des revendications 1 et 2, la première valeur de données transmise étant la première valeur de capteur acquise.

4. Procédé selon l'une des revendications 1 à 3, l'unité de soufflage (BE) comportant une commande centrale (6) et la première valeur moyenne statistique étant mémorisée (6) dans la commande centrale.

5. Procédé selon la revendication 4, l'unité de traitement de données faisant partie de la commande centrale (6).

6. Procédé selon l'une des revendications 1 à 5, l'unité de traitement de données étant formée par une pluralité d'unités de traitement de données décentralisées (8) et celles-ci faisant partie d'unités de commande décentralisées (5).

7. Procédé selon la revendication 6, la première valeur moyenne statistique étant mémorisée dans les unités de commande décentralisées (5).

8. Procédé selon l'une des revendications 1 à 7, le procédé comprenant au moins les étapes supplémentaires suivantes :
- déterminer si des premières valeurs de capteur transmises individuelles présentent un écart spécifié par rapport à la première valeur moyenne statistique et
- si une première valeur de capteur individuelle présente un tel écart, identifier le poste de soufflage (BS1-BS9) associé à la valeur de capteur.

9. Procédé selon l'une des revendications 1 à 8, le procédé comprenant au moins les étapes supplémentaires suivantes :
- acquérir au moins une deuxième valeur de capteur dans chaque poste de soufflage (BS1-BS9) dans un deuxième processus de soufflage,
- transmettre l'au moins une deuxième valeur de capteur acquise de chaque poste de soufflage (BS1-BS9) à l'unité de traitement de données (6, 8),
- déterminer une deuxième valeur moyenne statistique des deuxièmes valeurs de capteur transmises dans l'unité de traitement de données (6, 8),
- et de préférence, si la deuxième valeur moyenne statistique s'écarte de la première valeur moyenne statistique, définir la deuxième valeur moyenne statistique comme valeur cible.

10. Procédé selon la revendication 9, le procédé comprenant au moins les étapes supplémentaires suivantes :
- soit déterminer si des deuxièmes valeurs de capteur transmises individuelles présentent un écart spécifié par rapport à la première valeur moyenne statistique, soit déterminer si des deuxièmes valeurs de capteur transmises individuelles présentent un écart spécifié par rapport à la deuxième valeur moyenne statistique,
et,
- si une deuxième valeur de capteur individuelle présente un tel écart, identifier le poste de soufflage (BS1-BS9) associé à la valeur de capteur.

11. Procédé selon la revendication 10, après détermination de la deuxième valeur moyenne statistique, des deuxièmes valeurs de capteur individuelles, s'écartant d'abord de la deuxième valeur moyenne statistique ou en variante de la première valeur moyenne statistique, étant déterminées puis une nouvelle deuxième valeur moyenne statistique étant formée avec les deuxièmes valeurs de capteur restantes et, si cette nouvelle deuxième valeur moyenne statistique présente un écart par rapport à la première valeur statistique, cette nouvelle deuxième valeur moyenne statistique étant définie comme valeur cible pour les postes de soufflage (BS1-BS9).

12. Procédé selon l'une des revendications 9 à 11, la deuxième valeur de données transmise étant la deuxième valeur de capteur acquise.

13. Procédé selon la revendication 12, la première valeur de données transmise étant la différence entre la première valeur de capteur acquise et la valeur cible mémorisée.

14. Procédé selon la revendication 7 et l'une des revendications 12 ou 13, la deuxième valeur de données transmise étant la différence entre la deuxième valeur de capteur acquise et la valeur cible mémorisée.

15. Procédé selon l'une des revendications 1 à 14, l'au moins un capteur mesurant au moins un des paramètres suivants : pression dans le corps creux à fabriquer, pression dans un réservoir de fluide, débit d'une vanne pilote, position ou déplacement du piston d'une vanne de processus.

16. Système de commande d'une unité de soufflage comprenant plusieurs postes de soufflage, l'unité de soufflage comportant une unité de commande centrale et chaque poste de soufflage étant associé à au moins un capteur (41, 90, 91, 92, 93), l'unité de soufflage (BE) comportant au moins une unité de traitement de données (6, 8),
l'au moins une unité de traitement de données (6, 8) comportant des moyens d'évaluation afin de former une valeur moyenne statistique à partir de données basées sur des valeurs de capteur reçues des capteurs, l'unité de soufflage (BE) comportant des moyens de mémorisation destinés à mémoriser la valeur moyenne statistique déterminée comme valeur cible et le système de commande étant conçu pour mettre en oeuvre le procédé selon l'une des revendications 1 à 15.

17. Système de commande selon la revendication 16, une commande de machine étant prévue qui forme conjointement avec l'au moins une unité de traitement de données une unité de commande centrale (6).

18. Progiciel destiné à la mise en oeuvre du procédé selon l'une des revendications 1 à 15.
